(19) Europäisches Patentamt
European Patent Office
Office européen des brevets

(11) EP 4 549 476 A1

(12) EUROPEAN PATENT APPLICATION
published in accordance with Art. 153(4) EPC

(43) Date of publication:
07.05.2025 Bulletin 2025/19

(21) Application number: 23831565.9

(22) Date of filing: 29.06.2023

(51) International Patent Classification (IPC):
*C08F 222/40* (2006.01)

(52) Cooperative Patent Classification (CPC):
C08F 222/40

(86) International application number:
PCT/JP2023/024135

(87) International publication number:
WO 2024/005126 (04.01.2024 Gazette 2024/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 29.06.2022 JP 2022104991

(71) Applicants:
- Tosoh Corporation
Yamaguchi 746-8501 (JP)
- Kai Photonics Co., Ltd.
Tokyo 105-0004 (JP)

(72) Inventors:
- YAMADA, Satoru
Yokkaichi-shi, Mie 510-8540 (JP)
- WATANABE, Misaki
Yokkaichi-shi, Mie 510-8540 (JP)
- KATAGIRI, Fumiaki
Yokkaichi-shi, Mie 510-8540 (JP)
- KITAGAWA, Takahiro
Yokkaichi-shi, Mie 510-8540 (JP)
- KOIKE, Yasuhiro
Yokohama-shi, Kanagawa 225-0012 (JP)

(74) Representative: Novagraaf International SA
Chemin de l'Echo 3
1213 Onex, Geneva (CH)

# (54) METHOD FOR PRODUCING N-ALKYLMALEIMIDE COPOLYMER AND N-ALKYLMALEIMIDE COPOLYMER

(57) Provided is a method for efficiently producing an N-alkylmaleimide-based copolymer which has an excellent optical characteristic and excellent heat resistance, and also relates to an N-alkylmaleimide-based copolymer which has an excellent optical characteristic, excellent heat resistance, and excellent molding fluidity. In an aspect of the present invention, an N-alkylmaleimide-based copolymer is produced as a particulate product by precipitation polymerization in which radical copolymerization of monomers including 20% by weight to 95% by weight of a specific N-alkylmaleimide and 5% by weight to 80% by weight of a styrene compound is carried out in a specific polymerization solvent.



Processed by Luminess, 75001 PARIS (FR)

## Description

### Technical Field

The present invention relates to a method for producing an N-alkylmaleimide-based copolymer which contains constituent units derived from N-alkylmaleimide and a styrene compound, and also relates to an N-alkylmaleimide-based copolymer. More specifically, an aspect of the present invention relates to a method for efficiently producing an N-alkylmaleimide-based copolymer which has an excellent optical characteristic and excellent heat resistance, and also relates to an N-alkylmaleimide-based copolymer which has an excellent optical characteristic, excellent heat resistance, and excellent molding fluidity.

### Background Art

A copolymer (N-alkylmaleimide-based copolymer) which is obtained from N-alkylmaleimide is known to (i) exhibit higher heat resistance than a common thermoplastic vinyl polymer and (ii) be a resin having excellent transparency. Thus, an N-alkylmaleimide-based copolymer is a promising material as a transparent resin that can be used for various applications in an optical field (for example, see non-Patent Literature 1).

Further, an N-alkylmaleimide-based copolymer containing N-alkylmaleimide and a styrene compound has been reported to be capable of providing a polymer material that has simple composition, that has low birefringence, and that can maintain the low birefringence under a wide range of environmental temperatures (for example, see Patent Literature 1).

An N-alkylmaleimide-based copolymer can be produced by radical polymerization. Further, a method of producing the N-alkylmaleimide-based copolymer by radical polymerization can be any of methods conventionally known in the art, such as bulk polymerization, emulsion polymerization, suspension polymerization, and solution polymerization. However, in bulk polymerization, unfortunately, since a produced copolymer is an aggregate and removal of unreacted monomers is difficult, the transparency of the produced copolymer is impaired. Further, the produced copolymer has a high molecular weight, contains a low-strength copolymer component having a high content of N-alkylmaleimide, and exhibits fluidity during molding. On this account, in a case where a chain transfer agent is added to a material of the produced copolymer and the produced copolymer is made to have a low molecular weight, the strength of the produced copolymer decreases disadvantageously. In emulsion polymerization and suspension polymerization, it is difficult to remove an emulsifier and a dispersant, respectively. On the other hand, in solution polymerization in which a copolymer is dissolved in a polymerization solvent and is not precipitated as particles, for example, a copolymer having relatively preferable transparency can be obtained by purification via precipitation caused by putting, in a poor solvent, a produced copolymer solution after polymerization. However, industrially purifying a polymer by such a re-precipitation method is difficult and disadvantageously makes a production process complex, and therefore, is not practical.

In contrast, reported is a method in which polymerization is carried out with use of a polymerization solvent which dissolves monomers but does not dissolve a produced copolymer and which also causes the copolymer to be precipitated as particles, that is, a method of producing an N-alkylmaleimide-based copolymer by so-called precipitation polymerization (see, for example, Patent Literatures 2 to 4). In a case where the above method is used, impurities such as unreacted monomers that are considered to affect the transparency of the produced copolymer or a modified substance thereof are dissolved in the polymerization solvent. Thus, the impurities can be easily removed by separating produced copolymer particles from the polymerization solvent, so that it is possible to obtain an N-alkylmaleimide-based copolymer having good transparency.

Further, the methods typified by Patent Literatures 2 to 4 are excellent particularly in that a copolymer having an excellent optical characteristic can be obtained. This is because, in these methods, an emulsifier and a dispersant, which are normally used in emulsion polymerization and suspension polymerization, respectively, are not employed.

Further, in the method typified by Patent Literatures 2 to 4, the produced copolymer is obtained in the form of particles, and therefore, it is possible to simplify a production process such as a step of separation from a solvent and a drying step.

### Citation List

[Patent Literature]

[Patent Literature 1]
Japanese Patent Application Publication Tokukai No. 2020-126229
[Patent Literature 2]

Japanese Patent Application Publication Tokukaihei No. 5-194609
[Patent Literature 3]
Japanese Patent Application Publication Tokukaihei No. 5-209004
[Patent Literature 4]
Japanese Patent Application Publication Tokukaihei No. 5-247145

[Non-patent Literature]

[Non-patent Literature 1]
OTSU Takayuki, "Mirai Zairyou (Future Materials), Vol. 3, No. 1, pp. 74-79

Summary of Invention

Technical Problem

However, even in the methods typified in Patent Literatures 2 to 4, industrially disadvantageously, precipitation polymerization may not smoothly proceed in copolymerization of N-alkylmaleimide and a styrene compound, and this may result in (I) adhesion of the copolymer on a stirring blade and an inner wall of a polymerization vessel and (ii) blocking.

An aspect of the present invention is attained in view of the above problems. An object of an aspect of the present invention is to provide a method for efficiently producing an N-alkylmaleimide-based copolymer which has an excellent optical characteristic and excellent heat resistance, and also to provide an N-alkylmaleimide-based copolymer which has an excellent optical characteristic, excellent heat resistance, and excellent molding fluidity.

Solution to Problem

In order to attain the object, the inventors of the present invention carried out diligent studies, and, as a result, accomplished the present invention by finding a method for producing an N-alkylmaleimide-based copolymer by precipitation polymerization in which a specific polymerization solvent is used and also finding an N-alkylmaleimide-based copolymer having a specific structure.

In order to solve the above problems, a method in accordance with an aspect of the present invention for producing an N-alkylmaleimide-based copolymer includes performing radical copolymerization of monomers including: 20% by weight to 95% by weight of N-alkylmaleimide represented by formula (1) below, and 5% by weight to 80% by weight of a styrene compound, to produce an N-alkylmaleimide-based copolymer having constituent units derived from the N-alkylmaleimide and the styrene compound, the radical copolymerization of the monomers being performed in a polymerization solvent in which the monomers are dissolved and in which the N-alkylmaleimide-based copolymer produced are precipitated as particles. In the following formula (1), $R^1$ represents a linear alkyl group having 1 to 12 carbon atoms, a branched alkyl group having 3 to 12 carbon atoms, or a cyclic alkyl group having 3 to 6 carbon atoms.

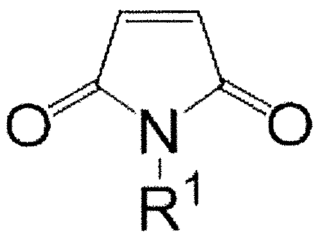
(1)

Further, in order to solve the above problems, an N-alkylmaleimide-based copolymer in accordance with an aspect of the present invention includes: 30% by weight to 70% by weight of an N-alkylmaleimide-based structural unit represented by formula (2) below; 10% by weight to 40% by weight of a styrene-based structural unit; and 10% by weight to 40% by weight of a (meth)acrylate-based structural unit, the N-alkylmaleimide-based copolymer satisfying the following requirements (a) and (b):

(a) the N-alkylmaleimide-based copolymer having a glass transition point (Tg) of 120°C to 180°C; and
(b) the N-alkylmaleimide-based copolymer having a weight average molecular weight (Mw) of 200,000 to 500,000.

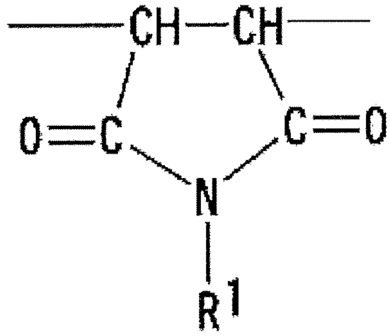

(2)

In the above formula (2), $R^1$ represents a linear alkyl group having 1 to 12 carbon atoms, a branched alkyl group having 3 to 12 carbon atoms, or a cyclic alkyl group having 3 to 6 carbon atoms.

Advantageous Effects of Invention

A production method of the present invention makes it possible to efficiently produce an N-alkylmaleimide-based copolymer that has an excellent optical characteristic and excellent heat resistance. More specifically, use of the N-alkylmaleimide-based copolymer of the present invention provides an N-alkylmaleimide-based copolymer that has excellent fluidity during molding.

Description of Embodiments

The following description will discuss aspects of the present invention in detail. A numerical range indicated herein using "to" represents a range including numerical values followed by and following "to" as a minimum value and a maximum value, respectively.

A method for producing a copolymer in accordance with an aspect of the present invention is for producing, by radical copolymerization of monomers including: 20% by weight to 95% by weight of N-alkylmaleimide represented by formula (1) below; and 5% by weight to 80% by weight of a styrene compound, an N-alkylmaleimide-based copolymer having constituent units derived from the N-alkylmaleimide and the styrene compound.

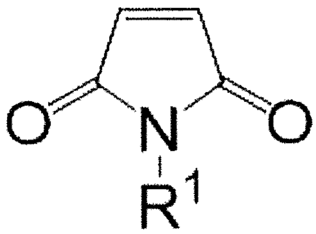

(1)

[N-alkylmaleimide]

In the formula (1), $R^1$ represents a linear alkyl group having 1 to 12 carbon atoms, a branched alkyl group having 3 to 12 carbon atoms, or a cyclic alkyl group having 3 to 6 carbon atoms. Examples of the linear alkyl group having 1 to 12 carbon atoms include a methyl group, an ethyl group, a propyl group, a butyl group, a pentyl group, a hexyl group, an octyl group, a decyl group, and a dodecyl group. Examples of the branched alkyl group having 3 to 12 carbon atoms include an isopropyl group, an isobutyl group, a sec-butyl group, and a tert-butyl group. Examples of the cyclic alkyl group having 3 to 6 carbon atoms include a cyclopropyl group, a cyclobutyl group, and a cyclohexyl group.

Among these, $R^1$ is preferably a methyl group, an ethyl group, a propyl group, an isopropyl group, a butyl group, an isobutyl group, a sec-butyl group, a tert-butyl group, a hexyl group, a cyclohexyl group, or an octyl group, and more preferably, a methyl group, an ethyl group, an isopropyl group, a tert-butyl group, or a cyclohexyl group, from the viewpoint of allowing a resulting N-alkylmaleimide-based copolymer to have higher heat resistance.

Further, $R^1$ is preferably any of an ethyl group, a tert-butyl group, and a cyclohexyl group, from the viewpoint of (i) relatively less affecting, as an N-alkylmaleimide compound, a surrounding environment and (ii) making it possible to simply equipment, and thus (iii) being capable of efficiently and economically producing the N-alkylmaleimide-based copolymer. It is possible to use one of N-alkylmaleimides represented by the formula (1) alone or use two or more in combination.

Specific examples of the N-alkylmaleimide represented by the formula (1) include N-methylmaleimide, N-ethylmaleimide, N-propylmaleimide, N-isopropylmaleimide, N-butylmaleimide, N-isobutylmaleimide, N-sec-butylmaleimide, N-tert-butylmaleimide, N-pentylmaleimide, N-hexylmaleimide, N-octylmaleimide, N-decylmaleimide, N-dodecylmaleimide, N-cyclopropylmaleimide, N-cyclobutylmaleimide, and N-cyclohexylmaleimide. Among these, the N-alkylmaleimide represented by the formula (1) is preferably N-methylmaleimide, N-ethylmaleimide, N-isopropylmaleimide, N-tert-butylmaleimide, or N-cyclohexylmaleimide, from the viewpoint of obtaining an N-alkylmaleimide-based copolymer that has better heat resistance. Further, the N-alkylmaleimide represented by the formula (1) is preferably N-ethylmaleimide, N-tert-butylmaleimide, or N-cyclohexylmaleimide, from the viewpoint of relatively less affecting, as an N-alkylmaleimide compound, a surrounding environment and being capable of efficiently and economically producing the N-alkylmaleimide-based copolymer with use of more simplified equipment.

[Styrene compound]

A styrene compound in an aspect of the present invention is a collective name for styrene and a derivative thereof, and is not limited, provided that the styrene compound is a monomer having a styrene skeleton. Examples of the styrene compound include alkylstyrene, halogenated styrene, alkoxystyrene, and styrene. Examples of the alkylstyrene include o-methylstyrene, m-methylstyrene, p-methylstyrene, o,p-dimethylstyrene, o-ethylstyrene, methylstyrene, p-ethylstyrene and $\alpha$-methylstyrene. Examples of the halogenated styrene include o-fluorostyrene, m-fluorostyrene, p-fluorostyrene, o-chlorostyrene, m-chlorostyrene, p-chlorostyrene, o-bromostyrene, m-bromostyrene and p-bromostyrene. Examples of the alkoxystyrene include o-methoxystyrene, m-methoxystyrene, p-methoxystyrene, o-ethoxystyrene, m-ethoxystyrene, and p-ethoxystyrene. Among these, the styrene compound is preferably styrene or $\alpha$-methylstyrene, from the viewpoint of obtaining an N-alkylmaleimide-based copolymer that has a better optical characteristic. It is possible to use one of these styrene compounds alone or use two or more in combination.

[Monomer content]

The monomers in accordance with an aspect of the present invention include an N-alkylmaleimide represented by the formula (1) and a styrene compound. In the monomers, a content of the N-alkylmaleimide is 20% by weight to 97% by weight and a content of the styrene compound is 3% by weight to 80% by weight. In the above content range, the content of the N-alkylmaleimide in the monomers is preferably 35% by weight to 97% by weight and more preferably 50% by weight to 97% by weight, because such a content can lead to obtainment of an N-alkylmaleimide-based copolymer that has, particularly, excellent heat resistance and an excellent optical characteristic. For the same reason, the content of the styrene compound in the monomers is preferably 3% by weight to 65% by weight and more preferably 3% by weight to 50% by weight. Further, it is preferable that in the monomers, the content of the N-alkylmaleimide be 55% by weight to 80% by weight and the content of the styrene compound is 20% by weight to 45% by weight, from the viewpoint of obtaining an N-alkylmaleimide-based copolymer having a better good photoelastic coefficient and better intrinsic birefringence.

[Other monomer]

Further, in the present embodiment, it is possible to copolymerize another copolymerizable monomer, if necessary. The other copolymerizable monomer is not limited, provided that the other copolymerizable monomer can be copolymerized with N-alkylmaleimide. Examples of the other copolymerizable monomer include an olefin, an acrylic acid alkyl ester, a methacrylic acid alkyl ester, and a carboxylic acid vinyl ester. Examples of the olefin include ethylene, propylene, 1-butene, and isobutene. Examples of the acrylic acid alkyl ester include methyl acrylate, ethyl acrylate, and butyl acrylate. Examples of the methacrylic acid alkyl ester include methyl methacrylate, ethyl methacrylate, and butyl methacrylate. Examples of the carboxylic acid vinyl ester include vinyl acetate, vinyl propionate, and vinyl pivalate.

Among these, the other copolymerizable monomer is preferably an acrylic acid alkyl ester or a methacrylic acid alkyl ester such as methyl acrylate ester or methyl methacrylate ester, from the viewpoint of achieving an N-alkylmaleimide-based copolymer which, while having simple composition, has low birefringence and can maintain the low birefringence under a wide range of environmental temperatures (e.g., 0°C to 80°C). It is possible to use one of such other copolymerizable monomers alone or two or more in combination.

[Polymerization method]

In the present embodiment, the N-alkylmaleimide-based copolymer is produced by precipitation polymerization using the above monomers as a materials. In other words, in the present embodiment, radical copolymerization of the monomers is performed in a polymerization solvent in which the monomers are dissolved and in which the N-alkylmaleimide-based copolymer generated is precipitated as particles.

[Polymerization solvent]

The polymerization solvent used in the production method in accordance with an aspect of the present invention is not limited, provided that in the solvent, although monomers can be dissolved, a produced N-alkylmaleimide-based copolymer is insoluble and is precipitated as particles. Examples of the polymerization solvent include aliphatic hydrocarbons, aromatic hydrocarbons, aqueous organic solvents, ketone-based organic solvents, ester-based organic solvents, and water. Examples of the aliphatic hydrocarbons include propane, butane, isobutane, hexane, methylcyclohexane, and octane. Examples of the aromatic hydrocarbons include benzene, toluene, and xylene. Examples of the aqueous organic solvents include methanol, ethanol, propanol, isopropanol, acetone, and acetonitrile. Examples of the ketone-based organic solvents include ketone-based organic solvents other than acetone, and include methylethylketone and methylisobutylketone. Examples of the ester-based organic solvents include ethyl acetate, butyl acetate, dimethyl carbonate, diethyl carbonate, and propylene carbonate. It is possible to use one of the above polymerization solvents alone or two or more in combination.

Among these, the polymerization solvent is preferably a mixed solvent consisting of an aqueous organic solvent and water or a mixed solvent consisting of an aliphatic hydrocarbon and an ester-based organic solvent, from the viewpoint of obtaining a particulate N-alkylmaleimide-based copolymer at a higher yield. More preferably, the polymerization solvent is a mixed solvent consisting of methanol and water, a mixed solvent consisting of methylcyclohexane and dimethyl carbonate, or a mixed solvent consisting of methylcyclohexane and butyl acetate. Particularly preferably, the polymerization solvent is a mixed solvent consisting of methanol and water.

In a case where the polymerization solvent is a mixed solvent consisting of an aqueous organic solvent and water, a mixture proportion of the aqueous organic solvent and water is not particularly limited. It is preferable that in the polymerization solvent, the content of the aqueous organic solvent be 50% by weight to 98% by weight and the content of water be 2% by weight to 50% by weight, from the viewpoint of obtaining a particulate N-alkylmaleimide-based copolymer at a higher yield. For the same reason, the content of the aqueous organic solvent in the polymerization solvent is more preferably 75% by weight to 97% by weight and even more preferably 80% by weight to 95% by weight. Further, for the same reason, the content of water in the polymerization solvent is more preferably 3% by weight to 25% by weight and even more preferably 5% by weight to 20% by weight.

In a case where the polymerization solvent is a mixed solvent consisting of an aliphatic hydrocarbon and an ester-based organic solvent, a mixture proportion of the aliphatic hydrocarbon and the ester-based organic solvent is not particularly limited. It is preferable that in the polymerization solvent, the content of the aliphatic hydrocarbon be 50% by weight to 98% by weight and the content of the ester-based organic solvent be 2% by weight to 50% by weight, from the viewpoint of obtaining a particulate N-alkylmaleimide-based copolymer at a higher yield. For the same reason, the content of the aliphatic hydrocarbon in the polymerization solvent is more preferably 55% by weight to 95% by weight and even more preferably 60% by weight to 90% by weight. Further, for the same reason, the content of the ester-based organic solvent in the polymerization solvent is more preferably 5% by weight to 45% by weight and even more preferably 10% by weight to 40% by weight.

[Polymerization initiator]

The production method in accordance with an aspect of the present invention may employ a radical polymerization initiator. The radical polymerization initiator is preferably an oil-soluble radical polymerization initiator. Examples of the oil-soluble radical polymerization initiator include organic peroxides and azo-based initiators. Examples of the organic peroxides include benzoyl peroxide, lauryl peroxide, octanoyl peroxide, acetyl peroxide, di-tert-butyl peroxide, tert-butylcumyl peroxide, dicumylperoxide, tert-butyl peroxyacetate, tert-butyl peroxybenzoate, tert-butyl peroxy-2-ethylhexanoate, tert-hexylperoxy-2-ethylhexanoate, 2,5-dimethyl-2,5-di(2-ethylhexanoylperoxy)hexane, 1,1,3,3-tetramethylbutylperoxy-2-ethylhexanoate, tert-butyl peroxypivalate, tert-hexyl peroxypivalate, tert-butyl peroxyneodecanoate, and tert-hexyl peroxyneodecanoate. Examples of the azo-based initiators include 2,2'-azobis(2,4-dimethylvaleronitrile), 2,2'-azobis(2-butylonitrile), 2,2'-azobisisobutyronitrile, dimethyl-2,2'-azobisisobutyrate, and 1,1'-azobis(cyclohexane-1-carbonitrile).

An amount of the oil-soluble radical polymerization initiator used can be set as appropriate. For example, the oil-soluble radical polymerization initiator may be used in an amount of 0.0001 parts by weight to 2 parts by weight with respect to a total amount of 100 parts by weight of monomers. In particular, the oil-soluble radical polymerization initiator is used in an amount of preferably 0.001 parts by weight to 1 part by weight and more preferably 0.01 parts by weight to 0.5 parts by weight, from the viewpoint of obtaining an N-alkylmaleimide-based copolymer which has an excellent optical characteristic and excellent mechanical strength.

[Polymerization temperature]

A polymerization temperature in accordance with an aspect of the production method of the present invention can be set as appropriate in accordance with a decomposition temperature of the oil-soluble radical polymerization initiator. Among such temperatures, in particular, the polymerization temperature is preferably in a range of 10°C to 80°C, more preferably in a range of 20°C to 70°C, and even more preferably in a range of 30°C to 60°C, from the viewpoint of efficiently producing an N-alkylmaleimide-based copolymer that has an excellent optical characteristic and excellent mechanical strength.

[Cleaning]

In the production method in accordance with an aspect of the present invention, after the particles of the N-alkylmaleimide-based copolymer obtained by precipitation polymerization are filtered, it is preferable to clean, with use of a cleaning solvent, the particles of the N-alkylmaleimide-based copolymer, from the viewpoint of efficiently and economically producing, in the form of particles, an N-alkylmaleimide-based copolymer that has an excellent optical characteristic and excellent mechanical strength.

The cleaning solvent is not limited, provided that the cleaning solvent is a solvent in which unreacted monomers are dissolved but the N-alkylmaleimide-based copolymer is not dissolved. Examples of the cleaning solvent include water, methanol, ethanol, a methanol/toluene mixed solvent, an ethanol/toluene mixed solvent, a methanol/water mixed solvent, and an ethanol/water mixed solvent. For example, in water, an unreacted N-alkylmaleimide monomer is soluble. On the other hand, in methanol, ethanol, the methanol/toluene mixed solvent, the ethanol/toluene mixed solvent, the methanol/-water mixed solvent, and the ethanol/water mixed solvent, both unreacted N-alkylmaleimide and an unreacted styrene compound are soluble.

[Other additive]

Further, in an aspect of the present invention, if necessary, a chain transfer agent such as an alkyl mercaptan, or a hindered phenol-based or phosphorus-based antioxidant may be used at the initial stage of, during or after the polymerization.

In an aspect of the present invention, as a result of a polymerization reaction, the N-alkylmaleimide-based copolymer is produced and the particles of the N-alkylmaleimide-based copolymer are obtained. In an aspect of the present invention, it is not necessary to employ an emulsifier or dispersant for enhancing dispersion stability of the particles. Thus, in an aspect of the present invention, an emulsifier or dispersant for that purpose is not added to a material composition (monomer mixture) of the polymerization reaction.

[Properties of N-alkylmaleimide-based copolymer]

The N-alkylmaleimide-based copolymer obtained by the production method in accordance with an aspect of the present invention is in the form of particles. Efficient removal of the polymerization solvent and/or the unreacted monomers results in obtainment of an N-alkylmaleimide-based copolymer that has an excellent optical characteristic and excellent mechanical strength. It is preferable that the particles of the N-alkylmaleimide-based polymer produced in the polymerization solvent have an average particle diameter of preferably 20 $\mu$m to 2,000 $\mu$m, more preferably 30 $\mu$m to 1,000 $\mu$m, and even more preferably 50 $\mu$m to 900 $\mu$m, from the viewpoint of efficiently removing the polymerization solvent or the unreacted monomers and obtaining an N-alkylmaleimide-based copolymer that has an excellent optical characteristic and excellent mechanical strength. The average particle diameter in the present specification is a particle diameter at which a volume-based cumulative particle weight determined by a laser diffraction and scattering method is 50%. The average particle diameter can be adjusted by classification of the particles and mixing of classified particles. Further, the average particle diameter can be adjusted by, for example, a stirring speed, the polymerization solvent, and a monomer content in precipitation polymerization.

An amount of an adhered substance included in the N-alkylmaleimide-based copolymer obtained by the production method in accordance with an aspect of the present invention is indicated by an adhered substance yield. The adhered substance yield is obtained by dividing, by a total weight of added monomers, an adhered substance weight obtained by (i) collecting a copolymer adhered to a stirring blade and an inner wall of a polymerization vessel after polymerization and then (ii) cleaning and drying the copolymer. The adhered substance yield is indicated in percent by weight. The production method in accordance with an aspect of the present invention results in a small adhered substance yield. The adhered substance yield is preferably not more than 51% by weight, more preferably not more than 40% by weight, even more preferably not more than 20% by weight, and particularly preferably not more than 10% by weight. The adhered substance yield can be controlled by polymerization solvent composition, added monomer composition, added

monomer concentration, or polymerization temperature.

[N-alkylmaleimide-based copolymer obtained by production method]

A weight average molecular weight ($M_w$) of the N-alkylmaleimide-based copolymer obtained by the production method in accordance with an aspect of the present invention is not particularly limited. The N-alkylmaleimide-based copolymer has a weight average molecular weight of preferably 100,000 to 2,000,000, more preferably 150,000 to 1,800,000, and particularly preferably 200,000 to 1,500,000, from the viewpoint of obtaining an N-alkylmaleimide-based copolymer which has an excellent optical characteristic and excellent mechanical strength.

A glass transition point (Tg) of the N-alkylmaleimide-based copolymer obtained by the production method in accordance with an aspect of the present invention serves as an indicator of heat resistance. The glass transition point (Tg) of the N-alkylmaleimide-based copolymer obtained by an aspect of the production method of the present invention is not particularly limited. The glass transition point is preferably not lower than 120°C, more preferably not lower than 135°C, and particularly preferably not lower than 150°C, because such a glass transition point can lead to obtainment of an N-alkylmaleimide-based copolymer which has excellent heat resistance.

A tensile stress of the N-alkylmaleimide-based copolymer obtained by the production method in accordance with an aspect of the present invention serves as an indicator of mechanical strength. The tensile stress of the N-alkylmaleimide-based copolymer obtained by an aspect of the production method of the present invention is not particularly limited. The tensile stress is preferably not less than 30 MPa, more preferably not less than 35 MPa, and particularly preferably not less than 40 MPa, because such a tensile stress can lead to obtainment of an N-alkylmaleimide-based copolymer which has excellent mechanical strength. Note that the tensile stress of the N-alkylmaleimide-based copolymer can be controlled by $M_w$.

A tensile elongation, which is an indicator of mechanical strength of the N-alkylmaleimide-based copolymer obtained by the production method in accordance with an aspect of the present invention, is not particularly limited. The tensile elongation is preferably not less than 2%, more preferably not less than 2.5%, and particularly preferably not less than 3%, because such a tensile elongation can lead to obtainment of an N-alkylmaleimide-based copolymer which has excellent mechanical strength.

A haze of the N-alkylmaleimide-based copolymer obtained by the production method in accordance with an aspect of the present invention is one of indicators of optical characteristics. The haze of the N-alkylmaleimide-based copolymer obtained by an aspect of the production method of the present invention is not particularly limited. The haze is preferably less than 3%, more preferably less than 2.5%, and particularly preferably less than 2%, because such a haze can lead to obtainment of an N-alkylmaleimide-based copolymer that has excellent transparency. Note that the haze of the N-alkylmaleimide-based copolymer can be controlled by an amount of residual monomers.

A photoelastic constant (C) and an intrinsic birefringence ($\Delta n^0$) of the N-alkylmaleimide-based copolymer obtained by the production method in accordance with an aspect of the present invention are each one of the indicators of optical characteristics. The photoelastic constant (C) and the intrinsic birefringence ($\Delta n^0$) of the N-alkylmaleimide-based copolymer obtained by an aspect of the production method of the present invention are not particularly limited to respective absolute values. The photoelastic constant of the N-alkylmaleimide-based copolymer is preferably not more than $50 \times 10^{-12}$ $Pa^{-1}$, more preferably not more than $10 \times 10^{-12}$ $Pa^{-1}$, and even more preferably not more than $2 \times 10^{-12}$ $Pa^{-1}$ in absolute values, because such a photoelastic constant can lead to obtainment of an N-alkylmaleimide-based copolymer that has low birefringence. For the same reason, the intrinsic birefringence of the N-alkylmaleimide-based copolymer is preferably not more than $20 \times 10^{-3}$, more preferably not more than $5 \times 10^{-3}$, and even more preferably not more than $1 \times 10^{-3}$ in absolute values. Note that C and $\Delta n^0$ of the N-alkylmaleimide-based copolymer can be controlled by a type of monomer and a proportion of monomer units in the N-alkylmaleimide-based copolymer.

A temperature constant ($d\Delta n^0/dT$) of the intrinsic birefringence of the N-alkylmaleimide-based copolymer obtained by the production method in accordance with an aspect of the present invention is one of the indicators of optical characteristics. The temperature constant ($d\Delta n^0/dT$) of the intrinsic birefringence of N-alkylmaleimide-based copolymer obtained by an aspect of the production method of the present invention is not particularly limited to an absolute value of the temperature constant. The temperature constant is preferably not more than $2 \times 10^{-5}$°$C^{-1}$ and more preferably not more than $1 \times 10^{-5}$°$C^{-1}$, because such a temperature constant can lead to obtainment of an N-alkylmaleimide-based copolymer which can maintain low birefringence under a wide range of environmental temperatures. Note that $d\Delta n^0/dT$ of the N-alkylmaleimide-based copolymer can be controlled by a monomer type and a proportion of monomer units in the N-alkylmaleimide-based copolymer.

[N-alkylmaleimide-based copolymer]

An N-alkylmaleimide-based copolymer in accordance with another aspect of the present invention includes: 30% by weight to 70% by weight of an N-alkylmaleimide-based structural unit represented by formula (2) below; 10% by weight

to 40% by weight of a styrene-based structural unit; and 10% by weight to 40% by weight of a (meth)acrylate-based structural unit. The N-alkylmaleimide-based copolymer satisfies the following requirements (a) and (b):

(a) the N-alkylmaleimide-based copolymer has a glass transition point (Tg) of 120°C to 180°C; and
(b) the N-alkylmaleimide-based copolymer has a weight average molecular weight (Mw) of 200,000 to 500,000. For example, the N-alkylmaleimide-based copolymer can be produced by the method in accordance with an aspect of the present invention for producing an N-alkylmaleimide-based copolymer.

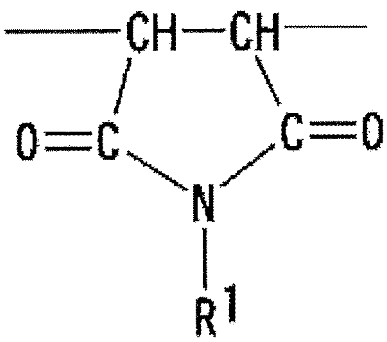

(2)

The N-alkylmaleimide-based structural unit is a repeating unit which has the same structure as a structure derived from the N-alkylmaleimide represented by the formula (1) in a radical copolymer of the N-alkylmaleimide. A styrene-based structural unit is a repeating unit which has the same structure as a structure derived from a styrene compound in a radical copolymer of a styrene compound (styrene or a derivative thereof). The (meth)acrylate-based structural unit is a repeating unit which has the same structure as a structure derived from a (meth)acrylate compound in a radical copolymer of a (meth)acrylate compound ((meth)acrylate or a derivative thereof).

$R^1$ in the formula (2) can be, for example, the same substituent as the $R^1$ in the formula (1). Specific examples of the N-alkylmaleimide-based structural unit represented by the formula (2) include an N-methylmaleimide unit, an N-ethylmaleimide unit, an N-propylmaleimide unit, an N-isopropylmaleimide unit, an N-butylmaleimide unit, an N-isobutylmaleimide unit, an N-sec-butylmaleimide unit, an N-tert-butylmaleimide unit, an N-pentylmaleimide unit, an N-hexylmaleimide unit, an N-octylmaleimide unit, an N-decylmaleimide unit, an N-dodecylmaleimide unit, an N-cyclopropylmaleimide unit, an N-cyclobutylmaleimide unit, and an N-cyclohexylmaleimide unit. Among these, the N-alkylmaleimide-based structural unit represented by the formula (2) is preferably an N-methylmaleimide unit, an N-ethylmaleimide unit, an N-isopropylmaleimide, an N-tert-butylmaleimide unit, or an N-cyclohexylmaleimide unit, from the viewpoint of obtaining an N-alkylmaleimide-based copolymer that has better heat resistance. Further, the N-alkylmaleimide-based structural unit represented by the formula (2) is more preferably an N-ethylmaleimide unit, an N-tert-butylmaleimide unit, or an N-cyclohexylmaleimide unit, from the viewpoint of relatively less affecting, as an N-alkylmaleimide compound, a surrounding environment and being capable of efficiently and economically producing the N-alkylmaleimide-based copolymer with use of more simplified equipment.

Examples of the styrene-based structural unit include an alkylstyrene unit, a halogenated styrene unit, an alkoxystyrene unit, and a styrene unit. Examples of the alkylstyrene unit include an o-methylstyrene unit, an m-methylstyrene unit, a p-methylstyrene unit, an o,p-dimethylstyrene unit, an o-ethylstyrene unit, an methylstyrene, a p-ethylstyrene and an $\alpha$-methylstyrene. Examples of the halogenated styrene unit include an o-fluorostyrene unit, an m-fluorostyrene unit, a p-fluorostyrene unit, an o-chlorostyrene unit, an m-chlorostyrene unit, a p-chlorostyrene unit, an o-bromostyrene unit, an m-bromostyrene unit, and a p-bromostyrene unit. Examples of the alkoxystyrene unit include an o-methoxystyrene unit, an m-methoxystyrene, a p-methoxystyrene unit, an o-ethoxystyrene unit, an m-ethoxystyrene unit, and a p-ethoxystyrene unit. Among these, the styrene-based structural unit is preferably a styrene unit or an $\alpha$-methylstyrene unit, from the viewpoint of obtaining an N-alkylmaleimide-based copolymer that has a better optical characteristic. It is possible to use one of these styrene compound units alone or use two or more in combination.

Examples of the (meth)acrylate-based structural unit include an acrylic acid alkyl ester unit and a methacrylic acid alkyl ester unit. Examples of the acrylic acid alkyl ester units include a methyl acrylate unit, an ethyl acrylate unit, and a butyl acrylate unit. Examples of the methacrylic acid alkyl ester unit include a methyl methacrylate unit, an ethyl methacrylate unit, and a butyl methacrylate unit. Among these, the (meth)acrylate-based structural unit is preferably a methyl acrylate unit or a methyl methacrylate unit, from the viewpoint of achieving an N-alkylmaleimide-based copolymer that has simple composition, that has low birefringence, and that can maintain the low birefringence under a wide range of environmental temperatures (e.g., 0°C to 80°C).

Further, in the N-alkylmaleimide-based copolymer, it is possible to contain another copolymerizable monomer unit, if necessary. Such other copolymerizable monomer unit is not limited, provided that the other copolymerizable

monomer unit can be copolymerized with N-alkylmaleimide. Examples of the other copolymerizable monomer unit include an olefin unit and a carboxylic acid vinyl ester unit. Examples of the olefin unit include an ethylene unit, a propylene unit, a 1-butene unit, and an isobutene unit. Examples of the carboxylic acid vinyl ester unit include a vinyl acetate unit, a vinyl propionate unit, and a vinyl pivalate unit.

In the N-alkylmaleimide-based copolymer in accordance with an aspect of the present invention, the ratio of the N-alkylmaleimide-based structural unit represented by the formula (2) is 30% by weight to 70% by weight, the ratio of the styrene-based structural unit is 10% by weight to 40% by weight; and the ratio of the (meth)acrylate-based structural unit is 10% by weight to 40% by weight. In the above ratio ranges, particularly preferably, the ratio of the N-alkylmaleimide-based structural unit represented by the formula (2) is 40% by weight to 60% by weight, the ratio of the styrene-based structural unit is 20% by weight to 30% by weight, and the (meth)acrylate-based structural unit of 20% by weight to 30% by weight, because such ratios can lead to obtainment of an N-alkylmaleimide-based copolymer that has excellent heat resistance and an excellent optical characteristic.

The Mw in (b) of the N-alkylmaleimide-based copolymer in accordance with another aspect of the present invention is preferably not less than 200,000, from the viewpoint of causing an excellent mechanical characteristic to be exhibited in addition to the excellent optical characteristic. Further, the Mw is preferably not more than 500,000, more preferably not more than 450,000, and particularly preferably not more than 400,000, from the viewpoint of causing an excellent fluidity during molding to be exhibited in addition to the excellent optical characteristic.

The range of Mw in (b) of the N-alkylmaleimide-based copolymer in accordance with another aspect of the present invention is preferably 200,000 to 500,000, more preferably 200,000 to 450,000, and particularly preferably 200,000 to 400,000, because a resultant N-alkylmaleimide-based copolymer has excellent molding fluidity in addition to the excellent optical characteristic and the excellent mechanical strength.

Note that the weight average molecular weight ($M_w$) of the N-alkylmaleimide-based copolymer can be controlled by the monomer concentration, the polymerization solvent, or the polymerization temperature.

The Tg in (a) of the N-alkylmaleimide-based copolymer in accordance with another aspect of the present invention is preferably not lower than 120°C, more preferably not lower than 135°C, even more preferably not lower than 150°C, and particularly preferably not lower than 161°C, from the viewpoint of causing excellent heat resistance to be exhibited. Further, the Tg is preferably not more than 180°C, more preferably not more than 175°C, and particularly preferably not more than 170°C, from the viewpoint of causing an excellent fluidity to be exhibited during molding.

The range of Tg in (a) of the N-alkylmaleimide-based copolymer in accordance with another aspect of the present invention is preferably in a range of 161°C to 180°C, more preferably in a range of 161°C to 175°C, and particularly preferably in a range of 161°C to 170°C. This is because the N-alkylmaleimide-based copolymer having a Tg in such a range has an excellent molding fluidity in addition to the excellent heat resistance.

Furthermore, the N-alkylmaleimide-based copolymer in accordance with another aspect of the present invention may satisfy the following requirement (c) in addition to the above requirements (a) and (b):

(c) in a chromatogram which is obtained by HPLC reverse phase chromatography using a poor solvent and a good solvent as mobile phases and which is composed of two or more kinds of components having respective different retention times, a ratio of a peak area of a component having a shorter retention time than the good solvent, relative to a total peak area, is 0.0% to 9.0%.

The HPLC reverse phase chromatography of the present invention is a method for separating and detecting a copolymer component in a solution using a difference in interaction between the stationary phase and the mobile phase. In the HPLC reverse phase chromatography of the present invention, a column with low polarity is used as the stationary phase, and a solvent with high polarity is passed through as the mobile phase, so that components are separated and detected in order of polarity from the highest to the lowest.

A filler in the above-described stationary phase column is not particularly limited. In order to separate and detect a copolymer component at high resolution, a silica gel having a surface silanol group sufficiently supplemented with a long-chain alkyl group is used. Examples of the silica gel which has a surface silanol group sufficiently supplemented with a long-chain alkyl group include TSKgel ODS-100V manufactured by TOSOH and TSKgel ODS-100Z manufactured by TOSOH.

The mobile phase is not particularly limited. In order to separate and detect a copolymer component at high resolution, solvent gradient is carried out from a poor solvent to a good solvent. Examples of the poor solvent include acetonitrile, and examples of the good solvent include tetrahydrofuran and chloroform. Examples of a method of the gradient include a method in which a solvent injected into a column is changed from a poor solvent to a good solvent during separation. Examples of a detector include: a UV detector, a UV-VIS detector, a diode array detector (DAD), a fluorescence (FL) detector, a conductivity detector, an electrochemical detector (ECD), an evaporative light scattering detector (ELSD), and a corona-charged particle detector (CAD).

In HPLC reverse phase chromatography, a copolymer component having a low molecular weight tends to have a shorter retention time regardless of polarity of the copolymer component. In order to separate and detect a copolymer component at high resolution in HPLC reverse phase chromatography, it is possible to employ a method in which after

separation by molecular weight is carried out in GPC, each separated component is evaluated separately by HPLC reverse phase chromatography.

In a UV detector chromatogram of HPLC reverse phase chromatography using a poor solvent and a good solvent as mobile phases, the N-alkylmaleimide-based copolymer in accordance with an aspect to the present invention has a ratio of a peak area of a component which has a shorter retention time than the good solvent, with respect to a total peak area, in a range of preferably 0.0% to 3.0%, more preferably 0.0% to 1.0%, and particularly preferably 0.0% to 0.5%. This is because the N-alkylmaleimide-based copolymer having such a ratio has excellent mechanical strength and excellent molding fluidity.

[Summary]

A method in accordance with an aspect of the present invention for producing an N-alkylmaleimide-based copolymer includes performing radical copolymerization of monomers including: 20% by weight to 95% by weight of N-alkylmaleimide represented by formula (1) below, and 5% by weight to 80% by weight of a styrene compound, to produce an N-alkylmaleimide-based copolymer having constituent units derived from the N-alkylmaleimide and the styrene compound, the radical copolymerization of the monomers being performed in a polymerization solvent in which the monomers are dissolved and in which the N-alkylmaleimide-based copolymer produced are precipitated as particles. In the following formula (1), $R^1$ represents a linear alkyl group having 1 to 12 carbon atoms, a branched alkyl group having 3 to 12 carbon atoms, or a cyclic alkyl group having 3 to 6 carbon atoms.

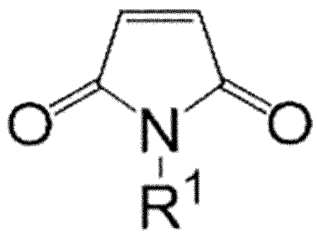

(1)

A method in accordance with a second aspect of the present invention for producing an N-alkylmaleimide-based copolymer is configured such that in the first aspect, $R^1$ is a methyl group, an ethyl group, a propyl group, an isopropyl group, a butyl group, an isobutyl group, a sec-butyl group, a tert-butyl group, a hexyl group, a cyclohexyl group, or an octyl group.

A method in accordance with a third aspect of the present invention for producing an N-alkylmaleimide-based copolymer is configured such that in the first or second aspect, the styrene compound is styrene or $\alpha$-methylstyrene.

A method in accordance with a fourth aspect of the present invention for producing an N-alkylmaleimide-based copolymer is configured such that in any one of the first to third aspects, the particles of the N-alkylmaleimide-based polymer produced in the polymerization solvent have an average particle diameter of 20 $\mu$m to 2,000 $\mu$m.

A method in accordance with a fifth aspect of the present invention for producing an N-alkylmaleimide-based copolymer is configured such that in any one of the first to fourth aspects, the polymerization solvent is a mixed solvent consisting of an aqueous organic solvent and water or a mixed solvent consisting of an aliphatic hydrocarbon and an ester-based organic solvent.

A method in accordance with a sixth aspect of the present invention for producing an N-alkylmaleimide-based copolymer is configured such that in the fifth aspect, the polymerization solvent contains 50% by weight to 98% by weight of the aqueous organic solvent and 2% by weight to 50% by weight of water.

A method in accordance with a seventh aspect of the present invention for producing an N-alkylmaleimide-based copolymer is configured such that in the fifth aspect, the polymerization solvent contains 50% by weight to 98% by weight of the aliphatic hydrocarbon and 2% by weight to 50% by weight of the ester-based organic solvent.

An N-alkylmaleimide-based copolymer in accordance with an eighth aspect of the present invention includes: 30% by weight to 70% by weight of an N-alkylmaleimide-based structural unit represented by formula (2) below; 10% by weight to 40% by weight of a styrene-based structural unit; and 10% by weight to 40% by weight of a (meth)acrylate-based structural unit, the N-alkylmaleimide-based copolymer satisfying the following requirements (a) and (b):

(a) the N-alkylmaleimide-based copolymer having a glass transition point (Tg) of 120°C to 180°C; and
(b) the N-alkylmaleimide-based copolymer having a weight average molecular weight (Mw) of 200,000 to 500,000.

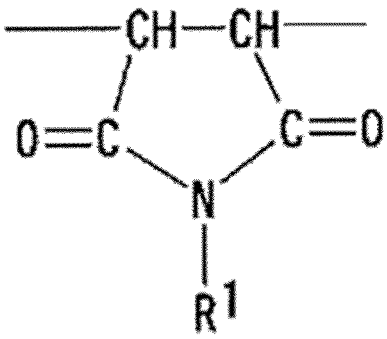

(2)

In the above formula (2), $R^1$ represents a linear alkyl group having 1 to 12 carbon atoms, a branched alkyl group having 3 to 12 carbon atoms, or a cyclic alkyl group having 3 to 6 carbon atoms.

An N-alkylmaleimide-based copolymer in accordance with a ninth aspect of the present invention is configured such that, in the eighth aspect, the following requirement (c) is satisfied:
(c) in a chromatogram which is obtained by HPLC reverse phase chromatography using a poor solvent and a good solvent as mobile phases and which is composed of two or more kinds of components having respective different retention times, a ratio of a peak area of a component having a shorter retention time than the good solvent, relative to a total peak area, is 0.0% to 9.0%.

A production method in accordance with the present aspect makes it possible to efficiently produce, by precipitation polymerization using a specific polymerization solvent, an N-alkylmaleimide-based copolymer that has an excellent optical characteristic and excellent heat resistance. Specifically, a film formed with use of the copolymer obtained by the production method in accordance with the present aspect has better transparency than a film formed with use of a copolymer obtained by conventional suspension polymerization or conventional emulsion polymerization. Further, although an operation in the production method in accordance with the present aspect is simpler than that in bulk polymerization, the film formed from the copolymer obtained by the production method in accordance with the present aspect has excellent optical characteristics (transparency and low birefringence) and excellent heat resistance, similarly to a film formed from a copolymer obtained through bulk polymerization. Thus, the production method in accordance with the present aspect makes it possible to more efficiently produce an N-alkylmaleimide-based copolymer that has an excellent optical characteristic and excellent heat resistance, than the bulk polymerization. The N-alkylmaleimide-based copolymer obtained by the production method in accordance with an aspect of the present invention has excellent optical characteristics and excellent heat resistance, and thus can be used in, for example, various optical members, optical lenses, optical sheets, and optical films.

The N-alkylmaleimide-based copolymer in accordance with an aspect of the present invention has a specific structure, and thus has excellent molding fluidity in addition to the optical characteristics and the heat resistance. Specifically, the N-alkylmaleimide-based copolymer in accordance with an aspect of the present invention has (a) Tg and (b) Mw in specific ranges, and thus has excellent fluidity during molding. Further, the N-alkylmaleimide-based copolymer in accordance with an aspect of the present invention has a specific composition distribution, and thus has excellent mechanical strength and excellent fluidity during molding. Specifically, the N-alkylmaleimide-based copolymer in accordance with an aspect of the present invention has a low content of a high-polarity low-strength copolymer component. Further, the N-alkylmaleimide-based copolymer in accordance with an aspect of the present invention can avoid a reduction in strength which is concerned about in the case of an N-alkylmaleimide-based copolymer obtained through bulk polymerization, even in a case where the molecular weight is reduced in order to cause molding fluidity to be exhibited. Thus, the N-alkylmaleimide-based copolymer in accordance with an aspect of the present invention has excellent mechanical strength and excellent molding fluidity. The N-alkylmaleimide-based copolymer in accordance with an aspect of the present invention has excellent mechanical strength and excellent fluidity during molding in addition to the optical characteristics and the heat resistance. Thus, the N-alkylmaleimide-based copolymer can be used in, for example, various optical members, optical lenses, and optical sheets which are obtained by injection molding or extrusion molding.

The present invention is not limited to the above-described embodiments, but can be altered within the scope of the claims. The present invention also encompasses, in its technical scope, any embodiment derived by combining, as appropriate, technical means disclosed in differing embodiments.

According to an aspect of the present invention, it is possible to efficiently produce an N-alkylmaleimide-based copolymer that has excellent optical characteristics and excellent heat resistance. Thus, an aspect of the present invention is expected to contribute to achieve sustainable development goals (SDGs) related to "Ensure sustainable consumption and production patterns" and "Build resilient infrastructure, promote inclusive and sustainable industrialization and foster innovation".

Examples

The following description will discuss the present invention according to Examples. Note, however, that these Examples by no means limit the present invention. Note that a reagent used is a commercially available product, unless otherwise noted. Tert-butyl peroxypivalate used was PERBUTYL PV from NOF CORPORATION. In PERBUTYL PV, the content of tert-butyl peroxypivalate is 71%. Tert-hexyl peroxyneodecanoate used was PERHEXYL ND from NOF CORPORATION. In PERHEXYL ND, the content of tert-hexyl peroxyneodecanoate is 71%. Tert-butyl peroxy-2-ethylhexanoate used was PERBUTYL O from NOF CORPORATION. In PERBUTYL O, the content of tert-butyl peroxy-2-ethylhexanoate is 97%. Hydroxypropyl methylcellulose (HPMC) used was METOLOSE (registered trademark) 90SH-100 from Shin-Etsu Chemical Co., Ltd.

The following description will discuss methods for evaluating and measuring N-alkylmaleimide-based copolymers obtained by Examples. Subsequently, specific examples of production of the N-alkylmaleimide-based copolymers are shown.

[Average particle diameter]

In 20 g of ion-exchange water, 150 mg of particles of an N-alkylmaleimide-based copolymer, which was produced in each of Examples described later, were dispersed, and a particle size distribution measuring machine MT-3300 from NIKKISO CO., LTD. was used to carry out measurement. A shape was set to a perfect sphere, and a refractive index was set to 1.549.

[Particle shape]

A tabletop microscope TM3030Plus from Hitachi High-Tech Corporation was used and an image signal was set to a secondary electron image signal. Then, the particles of the N-alkylmaleimide-based copolymer were observed in a standard mode at a magnification of 30 times to 100 times.

[N-alkylmaleimide content in polymer]

A predetermined amount of the N-alkylmaleimide-based copolymer was dissolved in deuterated chloroform (approximately 5% by weight), and 400MHzNMR (JNM-ECZ400S/L1) from JEOL Ltd. was used to carry out $^1$H-NMR measurement with respect to a resulting solution. For a copolymer of N-alkylmaleimide and a styrene compound, the content (RMI unit, percent by weight) of a structure derived from N-alkylmaleimide was calculated from an integral ratio of a peak between 5.0 ppm and 0.3 ppm to a peak between 8.0 ppm and 5.5 ppm.

[Weight average molecular weight Mw and molecular weight distribution Mw/Mn of polymer]

GPC (HLC-8320GPC) manufactured by TOSOH CORPORATION was used to measure a molecular weight distribution of the N-alkylmaleimide-based copolymer. Two columns (TSKgel Super HM-H manufactured by TOSOH CORPORATION) were used, a column temperature was set at 40°C, and tetrahydrofuran was used as an eluent to carry out measurement. Standard polystyrene manufactured by TOSOH CORPORATION with a known molecular weight was used to prepare a calibration curve of a molecular weight.

[Film forming]

The N-alkylmaleimide-based copolymer was dissolved in methylene chloride whose amount was 10 times the amount of the N-alkylmaleimide-based copolymer, and an applicator was used to spread a resulting polymer solution onto a PET film. The PET film on which the polymer solution was spread was covered with a lid, and a solvent was gradually evaporated. Then, an N-alkylmaleimide-based copolymer film formed on the PET film was peeled off, and dried under reduced pressure for 24 hours in a vacuum dryer set to 105°C.

[Solubility]

The N-alkylmaleimide-based copolymer was dissolved in chloroform whose amount was10 times the amount of the N-alkylmaleimide-based copolymer, and appearance of a resulting polymer solution was visually observed and the presence/absence of an insoluble part was evaluated.

[Film thickness]

A micrometer was used to measure film thickness of a film formed in the above "Film forming".

[Glass transition point (Tg)]

A differential scanning calorimeter DSC-60 from SHIMADZU CORPORATION was used to measure a glass transition point (Tg) during second scan temperature increase (rate of temperature increase = 10°C/min) of the film obtained in the above [Film forming].

[Photoelastic constant C]

An automatic birefringence control device ABR-EX manufactured by UNIOPT Co., Ltd. was used to carry out measurement. A retardation was measured by applying, to the film that was formed in [Film forming] described above and that had a width of 4 mm to 5 mm and a thickness of 35 $\mu$m to 55 $\mu$m, a stress of 0 N to 2 N while the stress was gradually increased by 0.1 N increments. A photoelastic constant C of the film was calculated from the retardation and a width of a measured part in a range of 0.3 N to 2 N.

[Intrinsic birefringence]

IMC-11A9, which is a biaxial film stretching device manufactured by Imoto machinery Co., LTD., was used to uniaxially stretch, at a temperature of not lower than Tg, a stretch speed of 40 mm to 100 mm/min, and a stretch ratio of 2 times to 3 times, the film formed in the above [Film forming]. Thereafter, a resultant stretched film was left to stand for not less than 24 hours so that internal stress of the stretched film was relaxed, and a Fourier transform infrared spectrophotometer IRTracer-100 manufactured by SHIMADZU CORPORATION was used to measure absorbance in an infrared region of the stretched film.

An infrared dichroism method was used to evaluate, from the measured absorbance, a degree of orientation f of each stretched film. A micrometer was used to measure the thickness d of each stretched film. Further, an automatic birefringence control device ABR-10A manufactured by UNIOPT Co., Ltd. was used to measure a retardation Re of each stretched film. Intrinsic birefringence $\Delta n^0$ was calculated, from values of the degree of orientation f, the thickness d, and the retardation Re of the stretched film, with use of the following formula (3):

$$Re = \Delta n^0 \cdot f \cdot d \quad (3)$$

[Temperature constant of intrinsic birefringence]

A temperature of the stretched film prepared in the above [Intrinsic birefringence] was increased by 5°C increments from 15°C to 70°C, and the automatic birefringence control device ABR-10A manufactured by UNIOPT Co., Ltd. was used to measure the retardation at each temperature so as to calculate the temperature constant $d\Delta n^0/dT$ of the intrinsic birefringence.

[Separation by GPC]

GPC(LaboACE LC-7080) manufactured by Japan Analytical Industry, Ltd. was used to separate an N-alkylmaleimide-based copolymer by molecular weight. Two columns (TSKgel GMHHR-H manufactured by TOSOH CORPORATION) were used, a column temperature was set to 25°C, and a flow rate was set to 6 mL/min. Tetrahydrofuran was used as an eluent, 2 mL of a tetrahydrofuran solution (5 mg/mL) of the N-alkylmaleimide-based copolymer was injected per time, and the N-alkylmaleimide-based copolymer was fractionated into five components having respective different molecular weights. GPC (HLC-8320GPC) manufactured by TOSOH CORPORATION was used to confirm the molecular weight of each of separated portions obtained. To this end, two columns (TSKgel GMHHR-H manufactured by TOSOH CORPORATION) were used as columns, a column temperature was set at 40°C, and a flow rate was set to 1 mL/min. Tetrahydrofuran was used as an eluent, and 100 pL of a tetrahydrofuran solution of each separated portion (1 mg/mL) was injected per time and evaluated.

[HPLC reverse phase chromatography]

HPLC (Prominence HPLC System) manufactured by SHIMADZU CORPORATION was used to measure GPC

separated portions obtained by fractionation. TSKgel ODS-100V manufactured by TOSOH CORPORATION was used as a stationary phase column, a column temperature was set at 40°C, and a flow rate was set to 1 mL/min. Acetonitrile was used as a mobile phase poor solvent, and tetrahydrofuran was used as a good solvent. A GPC separated portion was dissolved in tetrahydrofuran (1 mg/mL), and 10 pL of a resultant solution was injected into the stationary phase column filled with acetonitrile. Then, precipitation was carried out in the stationary phase column. Further, acetonitrile was injected into the column for 10 min, and then, after acetonitrile was switched to tetrahydrofuran, tetrahydrofuran was injected for 5 min. Separation was evaluated and a chromatogram was obtained with use of a UV detector. At a retention time of 1.9 min, the tetrahydrofuran used for dissolving the GPC separated portion and for filling the stationary phase column was detected. A peak of a component derived from the GPC separated portion was detected at retention times of approximately 2 min and 5.8 min as well as a retention time (1.1 min) that was shorter than that of the tetrahydrofuran. Areas of respective peaks of all of the GPC separated portions were summed. Thus, the ratio of the peak area of a component whose retention time was shorter than that of tetrahydrofuran to a total peak area (excluding a peak of tetrahydrofuran) was calculated.

[Example 1]

In a 500 mL four-necked flask provided with a stirrer, a nitrogen introduction tube, and a thermometer, 296.9 g of methanol, 33.0 g of distilled water, 18.0 g of styrene, 72.3 g of N-ethylmaleimide, and 409 mg of tert-hexyl peroxyneodecanoate were placed and nitrogen bubbling was carried out for 1 hour. Subsequently, the temperature of the four-necked flask was increased to 40°C while the contents of the four-necked flask was being stirred at 400 rpm. Then, precipitation polymerization was started. Precipitation of a particulate copolymer was observed as polymerization time passes.

After 10 hours, the contents of the four-necked flask were introduced into 2,000 g of distilled water stirred with a magnetic stirrer, and were filtered, so that N-alkylmaleimide-based copolymer particles produced were collected. Adhesion of 1.8 g of an irregularshaped copolymer was observed on an inner wall of the flask and the stirring blade/stirring shaft. The copolymer particles collected as particles were washed twice with 2,000 g of distilled water, and then cleaned three times with 1,584 g of methanol. The copolymer particles cleaned were placed in a dryer set at 95°C, and were dried under vacuum. Drying was stopped at a point in time when the weight no longer decreased by drying, and 59.46 g of an N-ethylmaleimide/ styrene copolymer was obtained. As a result of sieving, 0.13 g of particles remained on a sieve having a mesh size of 1 mm whereas all particles passed through a sieve having a mesh size of 2 mm.

[Example 2]

Precipitation polymerization was carried out as in Example 1 except that 296.8 g of methanol, 33.0 g of distilled water, 18.8 g of styrene, 71.5 g of N-ethylmaleimide, and 410 mg of tert-hexyl peroxyneodecanoate were used. Adhesion of 1.8 g of an irregularshaped copolymer was observed on an inner wall of the flask and the stirring blade/stirring shaft. Meanwhile, 66.6 g of a particulate N-ethylmaleimide/styrene copolymer was obtained. As a result of sieving, 2.69 g of particles remained on a sieve having a mesh size of 1 mm whereas all particles passed through a sieve having a mesh size of 2 mm.

[Example 3]

Precipitation polymerization was carried out as in Example 1 except that 296.4 g of methanol, 32.9 g of distilled water, 25.4 g of styrene, 64.8 g of N-ethylmaleimide, and 415 mg of tert-hexyl peroxyneodecanoate were used. Adhesion of 1.6 g of an irregularshaped copolymer was observed on an inner wall of the flask and the stirring blade/stirring shaft. Meanwhile, 66.5 g of a particulate N-ethylmaleimide/styrene copolymer was obtained. As a result of sieving, 30.2 g of particles remained on a sieve having a mesh size of 1 mm whereas all particles passed through a sieve having a mesh size of 2 mm.

[Example 4]

Precipitation polymerization was carried out as in Example 1 except that 295.4 g of methanol, 32.8 g of distilled water, 40.8 g of styrene, 49.1 g of N-ethylmaleimide, and 427 mg of tert-hexyl peroxyneodecanoate were used. Adhesion of 5.1 g of an irregularshaped copolymer was observed on an inner wall of the flask and the stirring blade/stirring shaft. Meanwhile, 82.8 g of a particulate N-ethylmaleimide/styrene copolymer was obtained. As a result of sieving, 36.7 g of particles remained on a sieve having a mesh size of 1 mm whereas all particles passed through a sieve having a mesh size of 2 mm.

[Example 5]

Precipitation polymerization was carried out as in Example 1 except that 282.4 g of methanol, 49.8 g of distilled water, 25.6 g of styrene, 65.4 g of N-ethylmaleimide, and 419 mg of tert-hexyl peroxyneodecanoate were used. Adhesion of 2.6 g of an irregularshaped copolymer was observed on an inner wall of the flask and the stirring blade/stirring shaft. Meanwhile, 66.7 g of a particulate N-ethylmaleimide/styrene copolymer was obtained. As a result of sieving, 37.0 g of particles remained on a sieve having a mesh size of 1 mm whereas all particles passed through a sieve having a mesh size of 2 mm.

[Example 6]

Precipitation polymerization was carried out as in Example 1 except that 268.1 g of methanol, 67.0 g of distilled water, 25.8 g of styrene, 66.0 g of N-ethylmaleimide, and 422.5 mg of tert-hexyl peroxyneodecanoate were used. Adhesion of 2.6 g of an irregularshaped copolymer was observed on an inner wall of the flask and the stirring blade/stirring shaft. Meanwhile, 66.4 g of a particulate N-ethylmaleimide/styrene copolymer was obtained. As a result of sieving, 37.0 g of particles remained on a sieve having a mesh size of 1 mm whereas all particles passed through a sieve having a mesh size of 2 mm.

[Example 7]

Precipitation polymerization was carried out as in Example 1 except that 253.6 g of methanol, 84.5 g of distilled water, 26.1 g of styrene, 66.5 g of N-ethylmaleimide, and 426 mg of tert-hexyl peroxyneodecanoate were used. Adhesion of 32.9 g of an irregularshaped copolymer was observed on an inner wall of the flask and the stirring blade/stirring shaft. Meanwhile, 39.1 g of a particulate N-ethylmaleimide/styrene copolymer was obtained. As a result of sieving, 1.9 g of particles remained on a sieve having a mesh size of 1 mm whereas all particles passed through a sieve having a mesh size of 2 mm.

[Example 8]

Precipitation polymerization was carried out as in Example 1 except that 268.1 g of methanol, 67.0 g of distilled water, 25.8 g of styrene, and 66.0 g of N-ethylmaleimide were used, 270 mg of tert-butyl peroxypivalate was used as a polymerization initiator, and the polymerization temperature was set at 50°C. Adhesion of 43.0 g of an irregularshaped copolymer was observed on an inner wall of the flask and the stirring blade/stirring shaft. Meanwhile, 27.9 g of a particulate N-ethylmaleimide/styrene copolymer was obtained. As a result of sieving, 7.7 g of particles remained on a sieve having a mesh size of 1 mm whereas all particles passed through a sieve having a mesh size of 2 mm.

[Example 9]

Precipitation polymerization was carried out as in Example 8 except that 160.9 g of methanol, 40.2 g of distilled water, 15.5 g of styrene, 39.6 g of N-ethylmaleimide, and 162 mg of tert-butyl peroxypivalate were used. Adhesion of 23.4 g of an irregularshaped copolymer was observed on an inner wall of the flask and the stirring blade/stirring shaft. Meanwhile, 19.2 g of a particulate N-ethylmaleimide/styrene copolymer was obtained.

[Example 10]

Precipitation polymerization was carried out as in Example 8 except that 125.0 g of methanol, 83.4 g of distilled water, 16.1 g of styrene, 41.0 g of N-ethylmaleimide, and 168 mg of tert-butyl peroxypivalate were used. Adhesion of 28.8 g of an irregularshaped copolymer was observed on an inner wall of the flask and the stirring blade/stirring shaft. Meanwhile, 13.6 g of a particulate N-ethylmaleimide/styrene copolymer was obtained.

[Example 11]

Precipitation polymerization was carried out as in Example 1 except that 284.9 g of methanol, 31.7 g of distilled water, 29.7 g of styrene, 75.8 g of N-ethylmaleimide, and 486 mg of tert-hexyl peroxyneodecanoate were used. Adhesion of 12.5 g of an irregularshaped copolymer was observed on an inner wall of the flask and the stirring blade/stirring shaft. Meanwhile, 69.7 g of a particulate N-ethylmaleimide/styrene copolymer was obtained. As a result of sieving, 6.4 g of particles remained on a sieve having a mesh size of 1 mm whereas all particles passed through a sieve having a mesh size of 2 mm.

[Example 12]

Precipitation polymerization was carried out as in Example 1 except that 268.6 g of methanol, 51.2 g of distilled water, 30.0 g of styrene, 76.6 g of N-ethylmaleimide, and 491 mg of tert-hexyl peroxyneodecanoate were used. Adhesion of 37.9 g of an irregularshaped copolymer was observed on an inner wall of the flask and the stirring blade/stirring shaft. Meanwhile, 44.9 g of a particulate N-ethylmaleimide/styrene copolymer was obtained. As a result of sieving, 5.5 g of particles remained on a sieve having a mesh size of 1 mm whereas all particles passed through a sieve having a mesh size of 2 mm.

[Example 13]

In a 50 mL glass reaction vessel, 16.4 g of methylcyclohexane, 7.0 g of butyl acetate, 1.8 g of styrene, and 4.6 g of N-ethylmaleimide were placed, and nitrogen bubbling was carried out for 50 min. Then, 29.6 mg of tert-hexyl peroxyneodecanoate was further placed, and nitrogen bubbling was further carried out for 10 min. Then, precipitation polymerization was carried out by holding a resultant mixture for 10 hours at 40°C while stirring was being carried out at 600 rpm by a magnetic stirrer. After end of the precipitation polymerization, the contents of the flask were introduced into 200 mL of methanol, and were filtered, so that N-alkylmaleimide-based copolymer particles produced were collected. Adhesion of 0.29 g of an irregularshaped copolymer was observed on an inner wall of the flask. The copolymer particles collected as particles were cleaned twice with 200 mL of methanol. The polymer particles cleaned were placed in a dryer set at 95°C, and were dried under vacuum. Drying was stopped at a point in time when the weight no longer decreased by drying, and 5.5 g of an N-ethylmaleimide/styrene copolymer was obtained.

[Example 14]

In a 500 mL four-necked flask provided with a stirrer, a nitrogen introduction tube, and a thermometer, 292.3 g of methylcyclohexane, 32.5 g of butyl acetate, 13.8 g of styrene, 16.3 g of methyl methacrylate, and 51.2 g of N-ethylmaleimide were placed, and nitrogen bubbling was carried out for 50 min. Then, 272.4 mg of tert-hexyl peroxyneodecanoate was further placed, and nitrogen bubbling was further carried out for 10 min. Subsequently, precipitation polymerization was carried out by holding a resultant mixture for 10 hours at 40°C while stirring was being carried out at 400 rpm by a magnetic stirrer. After end of the precipitation polymerization, the contents of the flask were introduced into 2 L of methanol, and were filtered, so that N-alkylmaleimide-based copolymer particles produced were collected. Adhesion of 3.57 g of an irregularshaped copolymer was observed on an inner wall of the flask. The polymer particles collected as particles were cleaned twice with 2 L of methanol. The polymer particles cleaned were placed in a dryer set at 95°C, and were dried under vacuum. Drying was stopped at a point in time when the weight no longer decreased by drying, and 71.5 g of an N-ethylmaleimide/styrene/methyl methacrylate copolymer was obtained. A resulting particulate N-alkylmaleimide-based copolymer had a Tg of 171.0°C and an Mw of 290,000. Separation by GPC was carried out to obtain an Mw=960,000 component (fraction 1), an Mw=490,000 component (fraction 2), an Mw=200,000 component (fraction 3), an Mw=74,000 component (fraction 4), and an Mw=25,000 component (fraction 5). Evaluation in HPLC reverse phase chromatography was carried out for each of separated portions, and three types of copolymer components were observed at retention times of 1.1 min, 2.0 min, and 5.8 min, respectively, in a UV detector chromatogram and an ELSD chromatogram. Areas of respective peaks of all of GPC separated portions were evaluated and summed. As a result, the sum of the peak areas of components whose retention time was shorter than that of tetrahydrofuran (retention time = 1.9 min in the UV detector chromatogram, and undetected in the ELSD chromatogram) was 1.0% of a total peak area (excluding that of tetrahydrofuran).

[Example 15]

In a 200 mL glass reaction vessel, 58.0 g of methylcyclohexane, 6.4 g of dimethyl carbonate, 5.0 g of styrene, and 12.7 g of N-ethylmaleimide were placed, and nitrogen bubbling was carried out for 50 min. Then, 81.3 mg of tert-hexyl peroxyneodecanoate was further placed, and nitrogen bubbling was further carried out for 10 min. Then, precipitation polymerization was carried out by holding a resultant mixture for 10 hours at 40°C while stirring was being carried out at 600 rpm by a magnetic stirrer. After end of the precipitation polymerization, the contents of the flask were introduced into 500 mL of methanol, and were filtered, so that N-alkylmaleimide-based copolymer particles produced were collected. Adhesion of 8.3 g of an irregularshaped copolymer was observed on an inner wall of the flask. The polymer particles collected as particles were cleaned twice with 500 mL of methanol. The polymer particles cleaned were placed in a dryer set at 95°C, and were dried under vacuum. Drying was stopped at a point in time when the weight no longer decreased by drying, and 7.8 g of an N-ethylmaleimide/styrene copolymer was obtained.

[Example 16]

In a 3 L four-necked flask provided with a stirrer, a nitrogen introduction tube, and a thermometer, 1747.38 g of methylcyclohexane, 194.78 g of butyl acetate, 98.04 g of styrene, 111.54 g of methyl methacrylate, and 277.22 g of N-ethylmaleimide were placed, and nitrogen bubbling was carried out for 110 min. Then, 831 mg of tert-hexyl peroxyneodecanoate was further placed, and nitrogen bubbling was further carried out for 10 min. Subsequently, precipitation polymerization was carried out by holding a resultant mixture for 24 hours at 40°C while stirring was being carried out at 167 rpm. After end of the precipitation polymerization, the contents of the flask were introduced into 2 L of methanol, and were filtered, so that N-alkylmaleimide-based copolymer particles produced were collected. Adhesion of 13.36 g of an irregularshaped copolymer was observed on an inner wall of the flask, a stirring bar, and a thermometer. The polymer particles collected as particles were cleaned three times with 2 L of methanol. The polymer particles cleaned were placed in a dryer set at 95°C, and were dried under vacuum. Drying was stopped at a point in time when the weight no longer decreased by drying, and 433.9 g of an N-ethylmaleimide/styrene/methyl methacrylate copolymer was obtained. A resulting particulate N-alkylmaleimide-based copolymer had a Tg of 165.0°C and an Mw of 289,000. Separation by GPC was carried out to obtain an Mw=1,070,000 component (fraction 1), an Mw=520,000 component (fraction 2), an Mw=200,000 component (fraction 3), an Mw=65,000 component (fraction 4), and an Mw=19,000 component (fraction 5). Evaluation in HPLC reverse phase chromatography was carried out for each of separated portions, and two types of copolymer components were observed at retention times of 2.0 min and 5.8 min, respectively, in a UV detector chromatogram and an ELSD chromatogram. Any component whose retention time was shorter than tetrahydrofuran (retention time = 1.9 min in the UV detector chromatogram, and undetected in the ELSD chromatogram) was not detected. Areas of respective peaks of all of GPC separated portions were evaluated and summed. As a result, the sum of the peak areas of all of GPC separated components whose retention time was shorter than that of tetrahydrofuran was 0.0% of a total peak area (excluding that of tetrahydrofuran).

[Comparative Example 1]

In a test tube, 3.8 g of N-ethylmaleimide and 1.2 g of styrene were placed and mixed. After the test tube was sealed, the contents of the test tube were mixed by sufficiently shaking the test tube. The test tube was then left to stand in a hot water bath at 70°C for 24 hours, and bulk polymerization was carried out. A resulting N-alkylmaleimide-based copolymer was a cylindrical mass having adhered inside the test tube. The cylindrical mass was removed from the test tube in order to remove unreacted monomers. Temporarily, the cylindrical mass was crushed into approximately 1 cm pieces and charged into methylene chloride, so that a transparent N-alkylmaleimide-based copolymer solution was produced. Subsequently, the N-alkylmaleimide-based copolymer solution thus obtained was dropped into methanol so as to precipitate the N-alkylmaleimide-based copolymer. Filtering was carried out with filter paper so as to remove filtrate in which the unreacted monomers were dissolved, and then the N-alkylmaleimide-based copolymer remaining on the filter paper was collected and dried under reduced pressure for 3 hours in a desiccator. Thereafter, the N-alkylmaleimide-based copolymer was further dried under reduced pressure for 24 hours in a vacuum dryer at 105°C, so that 4.0 g of the N-alkylmaleimide-based copolymer was obtained. A shape of N-alkylmaleimide-based copolymer particles was visually observed to be irregularshaped.

[Comparative Example 2]

In a 75 mL ampoule tube, 6.1 g of N-ethylmaleimide, 2.7 g of styrene, 35.4 g of toluene, and 19.0 mg of tert-butyl peroxypivalate were placed, and the ampoule tube was deaerated. Thereafter, the ampoule tube was melt-sealed by a burner. The sealed ampoule tube was placed in a hot water bath (set at 50°C) attached to a shaker, shaken for 10 hours, and solution polymerization was carried out. A resulting product was charged into 400 mL of chloroform so as to produce a transparent N-alkylmaleimide-based copolymer solution. Subsequently, the N-alkylmaleimide-based copolymer solution thus obtained was dropped into methanol so as to precipitate the N-alkylmaleimide-based copolymer. Filtering was carried out with filter paper, and the N-alkylmaleimide-based copolymer remaining on the filter paper was collected and dried under reduced pressure for 10 hours in a vacuum dryer set at 95°C, so that 7.9 g of the N-alkylmaleimide-based copolymer was obtained. A shape of N-alkylmaleimide-based copolymer particles was visually observed to be irregularshaped.

[Comparative Example 3]

In a 500 mL four-necked flask provided with a stirrer, a nitrogen introduction tube, and a thermometer, 0.852 g of hydroxypropyl methylcellulose (HPMC), 346.4 g of distilled water, 103.9 g of N-ethylmaleimide, 25.8 g of styrene, 18.4 g of toluene, and 100 mg of tert-butyl peroxy-2-ethylhexanoate were placed, and nitrogen bubbling was carried out for 1 hour. Thereafter, suspension polymerization was carried out by holding a resulting mixture at 70°C for 2 hours while stirring was

being carried out at 600 rpm. After end of the suspension polymerization, the contents of the flask were introduced into 2,500 g of distilled water stirred with a magnetic stirrer, and were filtered, so that N-alkylmaleimide-based copolymer particles were collected. The collected polymer particles were washed 6 times with 2,000 g of distilled water, and then cleaned 5 times with 1,582 g of methanol. Subsequently, the polymer particles were cleaned once with a mixed solvent of 487 g of toluene and 1,137 g of methanol, and then cleaned 5 times with 1,582 g of methanol. Further, the polymer particles were cleaned once with a mixed solvent of 827 g toluene and 827 g methanol, and then cleaned 5 times with 1,582 g methanol. The polymer particles cleaned were placed in a dryer set at 95°C, and were dried under vacuum. Drying was stopped at a point in time when the weight no longer decreased by drying, and 67.5 g of an N-ethylmaleimide/ styrene copolymer was obtained.

[Comparative Example 4]

Precipitation polymerization was carried out as in Example 8 except that 194.2 g of methanol, 15.0 g of styrene, 38.2 g of N-ethylmaleimide, and 157 mg of tert-butyl peroxypivalate were used and that no water was used. Adhesion of 29.9 g of an irregularshaped copolymer was observed on an inner wall of the flask and the stirring blade/stirring shaft. Meanwhile, 7.5 g of a particulate N-ethylmaleimide/styrene copolymer was obtained.

[Comparative Example 5]

Bulk polymerization was carried out as in Comparative Example 1 except that in a test tube, 3.15 g of N-ethylmaleimide, 0.85 g of styrene, 1.0 g of methyl methacrylate were placed. As a result, 4.0 g of an N-alkylmaleimide-based copolymer was obtained. The N-alkylmaleimide-based copolymer thus obtained had a Tg of 165.0°C and an Mw of 1,090,000. Separation by GPC was carried out to obtain an Mw=2,940,000 component (fraction 1), an Mw=2,120,000 component (fraction 2), an Mw=1,150,000 component (fraction 3), an Mw=440,000 component (fraction 4), and an Mw=120,000 component (fraction 5). Evaluation in HPLC reverse phase chromatography was carried out, as in Example 16, for each of separated portions, and three types of copolymer components were observed at retention times of 1.1 min, 2.0 min, and 7 to 8 min, respectively, in a UV detector chromatogram. Areas of respective peaks of all of GPC separated portions were summed. As a result, the sum of the peak areas of components whose retention time was shorter than that of tetrahydrofuran (retention time = 1.9 min) was 10% of a total peak area (excluding that of tetrahydrofuran).

[Reference Example 1]

Evaluation in HPLC reverse phase chromatography was carried out for an N-ethylmaleimide homopolymer, a styrene homopolymer, a methyl methacrylate homopolymer, and an N-ethylmaleimide/ styrene alternating copolymer. As a result, in an UV detector chromatogram, a peak of an EMI homopolymer appeared at a retention time = 1.1 min. Further, a peak of the styrene homopolymer appeared at 11 min. Moreover, a peak of the methyl methacrylate homopolymer appeared at 7 min to 8 min. Furthermore, a peak of a N-ethylmaleimide/styrene alternating copolymer appeared at 2 min. It was found that a component having a peak at a retention time of 1.1 min in the N-alkylmaleimide-based copolymer was a polymer which exhibits a polarity close to that of the EMI homopolymer having its peak at substantially the same retention time.

Tables 1 and 2 show, for the above Examples and Comparative Examples, added composition of monomers and polymerization solvents in production of N-alkylmaleimide-based copolymer particles. Table 3 shows prepared composition of initiators and production conditions. Table 4 shows, for the above Examples and Comparative Examples, results of production of the N-alkylmaleimide-based copolymer particles. Further, Table 5 shows, for the above Examples and Comparative Examples, solubility of resultant N-alkylmaleimide-based copolymers in chloroform, and film characteristics such as film thickness, heat resistance, photoelastic constant, intrinsic birefringence, and temperature constant of intrinsic birefringence. In Tables 4 and 5, numerical values are omitted for data that are not characteristic and cells for such data may be left as blank cells.

Note that in the table, "RMI" represents N-alkylmaleimide, "St" represents a styrene compound (styrene), "EMI" represents N-ethylmaleimide, "MMA" represents methyl methacrylate, and "MCH" represents methylcyclohexane. Further, in "water[a)]" of a solvent B in Comparative Example 3 in Table 2 indicates that 0.0085 parts by weight of hydroxypropyl methylcellulose was contained as a dispersant in water of the solvent B.

[Table 1]

| Example No. | Monomer | | | | | | Polymerization Solvent | | | | |
|---|---|---|---|---|---|---|---|---|---|---|---|
| | RMI+St (wt%) | RMI | | | St (pts.wt.) | MMA (pts.wt.) | Solvent A | | Solvent B | | |
| | | Type | (mol%) | (pts.wt.) | | | Type | (pts.wt.) | Type | (pts.wt.) | Mixing Ratio (wt%) |
| Example 1 | 21.5 | EMI | 77.0 | 80.1 | 19.9 | 0.0 | methanol | 328.8 | distilled water | 36.5 | 10 |
| Example 2 | 21.5 | ↑ | 76.0 | 79.2 | 20.8 | 0.0 | ↑ | 328.7 | ↑ | 36.5 | 10 |
| Example 3 | 21.5 | ↑ | 68.0 | 71.8 | 28.2 | 0.0 | ↑ | 328.6 | ↑ | 36.5 | 10 |
| Example 4 | 21.5 | ↑ | 50.0 | 54.6 | 45.4 | 0.0 | ↑ | 328.6 | ↑ | 36.5 | 10 |
| Example 5 | 21.5 | ↑ | 68.0 | 71.9 | 28.1 | 0.0 | ↑ | 310.3 | ↑ | 54.7 | 15 |
| Example 6 | 21.5 | ↑ | 68.0 | 71.9 | 28.1 | 0.0 | ↑ | 292.0 | ↑ | 73.0 | 20 |
| Example 7 | 21.5 | ↑ | 68.0 | 71.8 | 28.2 | 0.0 | ↑ | 273.9 | ↑ | 91.3 | 25 |
| Example 8 | 21.5 | ↑ | 68.0 | 71.9 | 28.1 | 0.0 | ↑ | 292.0 | ↑ | 73.0 | 20 |
| Example 9 | 21.5 | ↑ | 68.0 | 71.9 | 28.1 | 0.0 | ↑ | 292.0 | ↑ | 73.0 | 20 |
| Example 10 | 21.5 | ↑ | 67.9 | 71.8 | 28.2 | 0.0 | ↑ | 218.9 | ↑ | 146.1 | 40 |
| Example 11 | 25.0 | ↑ | 68.0 | 71.8 | 28.2 | 0.0 | ↑ | 270.0 | ↑ | 30.0 | 10 |
| Example 12 | 25.0 | ↑ | 68.0 | 71.9 | 28.1 | 0.0 | ↑ | 252.0 | ↑ | 48.0 | 16 |
| Example 13 | 21.5 | ↑ | 68.0 | 71.9 | 28.1 | 0.0 | MCH | 256.3 | butyl acetate | 109.4 | 30 |
| Example 14 | 20.0 | ↑ | 58.1 | 63.0 | 17.0 | 20.0 | ↑ | 360.0 | ↑ | 40.0 | 10 |
| Example 15 | 21.6 | ↑ | 67.9 | 71.8 | 28.2 | 0.0 | ↑ | 327.7 | dimethyl carbonate | 36.2 | 10 |
| Example 16 | 20.0 | ↑ | 52.0 | 57.1 | 20.1 | 22.8 | ↑ | 359.0 | butyl acetate | 40.0 | 10 |

[Table 2]

| Example No. | Monomer | | | | | | Polymerization Solvent | | | | |
|---|---|---|---|---|---|---|---|---|---|---|---|
| | RMI+St (wt%) | RMI | | | St (pts.wt.) | MMA (pts.wt.) | Solvent A | | Solvent B | | |
| | | Type | (mol%) | (pts.wt.) | | | Type | (pts.wt.) | Type | (pts.wt.) | Mixing Ratio (wt%) |
| Comparative Example 1 | 100.0 | EMI | 72.5 | 76.0 | 24.0 | 0.0 | - | 0.0 | - | 0.0 | - |
| Comparative Example 2 | 19.9 | ↑ | 65.3 | 69.3 | 30.7 | 0.0 | toluene | 402.3 | - | 0.0 | 0 |
| Comparative Example 3 | 26.2 | ↑ | 77.0 | 80.1 | 19.9 | 0.0 | toluene | 14.2 | water[a)] | 267.1 | 95 |
| Comparative Example 4 | 21.5 | ↑ | 67.9 | 71.8 | 28.2 | 0.0 | methanol | 365.0 | - | 0.0 | 0 |
| Comparative Example 5 | 100.0 | ↑ | 58.1 | 63.0 | 17.0 | 20.0 | - | 0.0 | - | 0.0 | - |

[Table 3]

| Example No. | Initiator | | Production Conditions | |
|---|---|---|---|---|
| | Type | (pts.wt.) | Polymerization Temperature (°C) | Polymerization Time (hour) |
| Example 1 | PERHEXYL ND | 0.45 | 40 | 10 |
| Example 2 | ↑ | 0.45 | ↑ | ↑ |
| Example 3 | ↑ | 0.46 | ↑ | ↑ |
| Example 4 | ↑ | 0.48 | ↑ | ↑ |
| Example 5 | ↑ | 0.46 | ↑ | ↑ |
| Example 6 | ↑ | 0.46 | ↑ | ↑ |
| Example 7 | ↑ | 0.46 | ↑ | ↑ |
| Example 8 | PERBUTYL PV | 0.29 | 50 | ↑ |
| Example 9 | ↑ | 0.29 | ↑ | ↑ |
| Example 10 | ↑ | 0.29 | ↑ | ↑ |
| Example 11 | PERHEXYL ND | 0.46 | 40 | ↑ |
| Example 12 | ↑ | 0.46 | ↑ | ↑ |
| Example 13 | ↑ | 0.46 | ↑ | ↑ |
| Example 14 | ↑ | 0.47 | ↑ | ↑ |
| Example 15 | ↑ | 0.46 | ↑ | ↑ |
| Example 16 | ↑ | 0.17 | ↑ | 24 |
| Comparative Example 1 | - | 0.00 | 70 | 24 |
| Comparative Example 2 | PERBUTYL PV | 0.22 | 50 | 10 |
| Comparative Example 3 | PERBUTYL O | 0.08 | 70 | 2 |
| Comparative Example 4 | PERBUTYL PV | 0.29 | 50 | 2 |
| Comparative Example 5 | - | 0.00 | 70 | 24 |

[Table 4]

| Example No. | Total Yield (wt%) | Adhering Substance Yield (wt%) | Copolymer Particles | | | | | |
|---|---|---|---|---|---|---|---|---|
| | | | ≤ 2 mm Yield (wt%) | ≤ 1 mm Yield (wt%) | Average Particle Diameter (μm) | RMI Unit (wt%) | Mw ($\times 10^4$) | Mw/Mn |
| Example 1 | 67.8 | 2.0 | 65.8 | 65.7 | - | 69 | 41 | 8.4 |
| Example 2 | 75.8 | 2.0 | 73.8 | 70.8 | - | 68 | 47 | 8.5 |
| Example 3 | 75.5 | 1.8 | 73.7 | 40.2 | 110 | 67 | 47 | 9.6 |
| Example 4 | 97.8 | 5.7 | 92.1 | 51.3 | - | 54 | 65 | 4.7 |
| Example 5 | 76.1 | 2.8 | 73.3 | 32.7 | 43 | 68 | - | - |
| Example 6 | 75.2 | 2.9 | 72.3 | 48.3 | 32 | - | - | - |
| Example 7 | 77.7 | 35.5 | 42.2 | 40.2 | 62 | - | - | - |
| Example 8 | 77.2 | 46.8 | 30.4 | 22.0 | 42 | - | - | - |
| Example 9 | 77.3 | 42.5 | 34.8 | - | - | - | - | - |
| Example 10 | 74.3 | 50.5 | 23.8 | - | - | - | - | - |
| Example 11 | 77.9 | 11.8 | 66.1 | 60.0 | - | 64 | 59 | 10.4 |

(continued)

| Example No. | Total Yield (wt%) | Adhering Substance Yield (wt%) | Copolymer Particles | | | | | |
|---|---|---|---|---|---|---|---|---|
| | | | ≤ 2 mm Yield (wt%) | ≤ 1 mm Yield (wt%) | Average Particle Diameter (μm) | RMI Unit (wt%) | Mw ($\times 10^4$) | Mw/Mn |
| Example 12 | 77.7 | 35.6 | 42.1 | 36.9 | - | 66 | 42 | 9.9 |
| Example 13 | 90.6 | 4.5 | 86.1 | - | - | 68 | 39 | 5.4 |
| Example 14 | 88.0 | 4.4 | 83.6 | - | - | - | 29 | 3.0 |
| Example 15 | 91.0 | 47.0 | 44.0 | - | - | 76 | 19 | 4.4 |
| Example 16 | 91.9 | 3.0 | - | - | - | 56 | 29 | 3.3 |
| Comparative Example 1 | 80.0 | - | 0.0 | - | - | 67 | 106 | 2.4 |
| Comparative Example 2 | 89.8 | - | 0.0 | - | - | 67 | 37 | 7.9 |
| Comparative Example 3 | 52.0 | - | 52.0 | 52.0 | 103 | 67 | 93 | 2.8 |
| Comparative Example 4 | 70.3 | 56.2 | 14.1 | - | - | - | - | - |
| Comparative Example 5 | 80.0 | - | - | - | - | 55 | 109 | 2.5 |

[Table 5]

| Example No. | Soluble Chloroform | Film Characteristics | | | | |
|---|---|---|---|---|---|---|
| | | Thickness (μm) | Heat Resistance Tg (°C) | Optical Characteristics | | |
| | | | | C ($\times 10^{-12}$ $Pa^{-1}$) | $\Delta n^0$ ($\times 10^{-3}$) | d$\Delta n^0$/dT ($\times 10^{-5}$°C $^{-1}$) |
| Example 1 | no insoluble part | 50 | 196 | 1.68 | 5.03 | 0.83 |
| Comparative Example 1 | no insoluble part | 50 | 194 | 0.91 | 0.08 | 0.79 |
| Comparative Example 2 | no insoluble part | 50 | 191 | 1.13 | - | - |
| Comparative Example 3 | insoluble part present | 52 | - | - | - | - |
| Example 16 | no insoluble part | 50 | 165 | -0.01 | 0.23 | 0.85 |
| Comparative Example 5 | no insoluble part | 50 | 165 | -0.24 | 0.10 | 1.21 |

[Consideration]

It is clear that in Examples, the N-alkylmaleimide-based copolymers are produced in sufficient amounts as particles and that the polymerization solvents in Examples are useful enough as polymerization solvents for precipitation polymerization in producing the copolymer of N-alkylmaleimide and the styrene compound.

It is also clear, from a comparison between Example 4 and Examples 1 to 3, that a larger amount of N-ethylmaleimide added results in a smaller adhered substance yield.

It is also clear, from a comparison between Example 3 and Example 5, a comparison between Example 5 and Example 6, a comparison between Example 6 and Example 7, and a comparison between Example 9 and Example 10, that a lower mixing ratio of distilled water in a mixed solvent of methanol/distilled water results in a smaller adhered substance yield.

It is also clear, from a comparison between Example 6 and Example 8, that in a case where the polymerization initiator is changed from tert-hexyl peroxyneodecanoate to tert-butyl peroxypivalate and the polymerization temperature is increased from 40°C to 50°C, the adhered substance yield increases.

It is also clear, from a comparison between Example 3 and Example 11 and a comparison between Example 5 and Example 12, that a lower monomer concentration (RMI + St) results in a smaller adhered substance yield.

According to Example 13, it is clear that a mixed solvent of methylcyclohexane/butyl acetate is also effective in

controlling the adhered substance yield.

According to Example 14, in view of the Tg and the Mw of the resulting N-alkylmaleimide-based copolymer, a good molding fluidity can be obtained. Further, the N-alkylmaleimide-based copolymer is composed of the three types of copolymer components whose retention times are different from each other in HPLC reverse phase chromatography. In the case of this N-alkylmaleimide-based copolymer, the ratio of the peak area of the component whose retention time is shorter than that of tetrahydrofuran (retention time = 1.9 min in the UV detector chromatogram, and undetected in the ELSD chromatogram) to the total peak area is in a range of 0.0% to 9.0%, and a component that causes a decrease in strength is reduced.

According to Example 15, it is clear that a mixed solvent of methylcyclohexane/dimethyl carbonate is also effective in controlling the adhered substance yield.

According to Example 16, in view of the Tg and the Mw of the resulting N-alkylmaleimide-based copolymer, a good fluidity can be obtained during molding. Further, the N-alkylmaleimide-based copolymer is composed of two types of copolymer components whose retention times are different from each other in HPLC reverse phase chromatography. In the case of this N-alkylmaleimide-based copolymer, no component whose retention time is shorter than that of tetrahydrofuran (retention time = 1.9 min in the UV detector chromatogram, and undetected in the ELSD chromatogram) is detected, and no component that causes a decrease in strength is contained.

Comparative Example 1 is a production example of an N-alkylmaleimide-based copolymer by use of bulk polymerization. In Comparative Example 1, since the resultant copolymer is an aggregate, a step of crushing of the aggregate, a step of dissolving the aggregate in a solvent, and a step of precipitating the copolymer in the solvent in which the unreacted monomers are dissolved are necessary.

Comparative Example 2 is a production example of an N-alkylmaleimide-based copolymer by use of solution polymerization. In Comparative Example 2, since a resultant copolymer is dissolved in a polymerization solvent, a step of precipitating the copolymer in the solvent in which unreacted monomers are dissolved are necessary.

Comparative Example 3 is a production example of an N-alkylmaleimide-based copolymer by use of suspension polymerization. In Comparative Example 3, since a dispersant remains in the copolymer produced, an insoluble substance (gel) exists in dissolution into chloroform, and a gel removal step is necessary before forming a transparent film.

In Comparative Example 4, in a comparison with Examples 9 and 10, the adhered substance yield is larger than those of the Examples, as a result of changing the polymerization solvent from the mixed solvent of methanol/distilled water to a methanol-only solvent.

Comparative Example 5 is a production example of an N-alkylmaleimide-based copolymer by use of bulk polymerization. In view of the Mw of the N-alkylmaleimide-based copolymer obtained, the Mw needs to be decreased in order to cause good fluidity to be exhibited during molding. Further, the N-alkylmaleimide-based copolymer is composed of three types of copolymer components whose retention times are different from each other in HPLC reverse phase chromatography. In the case of this N-alkylmaleimide-based copolymer, the ratio of a copolymer component whose retention time is shorter than that of tetrahydrofuran to the N-alkylmaleimide-based copolymer is more than 9.0% and a component that causes a decrease in strength is contained in a large amount. Thus, a decrease in strength becomes noticeable, in a case where the molecular weight is decreased for causing good molding fluidity to be exhibited.

It is clear, from a result of evaluation in HPLC reverse phase chromatography of the N-ethylmaleimide homopolymer, the styrene homopolymer, the methyl methacrylate homopolymer, and the N-ethylmaleimide/styrene alternating copolymer of Reference Example 1, that components having a shorter retention time than tetrahydrofuran in the N-alkylmaleimide-based copolymers obtained in Example 14 and Comparative Example 5 are polymers which exhibit a polarity close to that of the EMI homopolymer which has a peak at substantially the same retention time.

Industrial Applicability

The present invention can be used to produce materials of various optical members (such as optical lenses, optical sheets, and optical films) that have an excellent optical characteristic and excellent heat resistance.

## Claims

**1.** A method for producing an N-alkylmaleimide-based copolymer, comprising

performing radical copolymerization of monomers including:

20% by weight to 95% by weight of N-alkylmaleimide represented by the following formula (1),

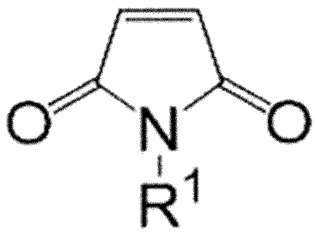

(1)

where $R^1$ represents a linear alkyl group having 1 to 12 carbon atoms, a branched alkyl group having 3 to 12 carbon atoms, or a cyclic alkyl group having 3 to 6 carbon atoms; and
5% by weight to 80% by weight of a styrene compound,

to produce an N-alkylmaleimide-based copolymer having constituent units derived from the N-alkylmaleimide and the styrene compound,
the radical copolymerization of the monomers being performed in a polymerization solvent in which the monomers are dissolved and in which the N-alkylmaleimide-based copolymer produced are precipitated as particles.

**2.** The method as set forth in claim 1, wherein $R^1$ is a methyl group, an ethyl group, a propyl group, an isopropyl group, a butyl group, an isobutyl group, a sec-butyl group, a tert-butyl group, a hexyl group, a cyclohexyl group, or an octyl group.

**3.** The method as set forth in claim 1 or 2, wherein the styrene compound is styrene or α-methylstyrene.

**4.** The method as set forth in claim 1 or 2, wherein the particles of the N-alkylmaleimide-based polymer produced in the polymerization solvent have an average particle diameter of 20 μm to 2,000 μm.

**5.** The method as set forth in claim 1 or 2, wherein the polymerization solvent is a mixed solvent consisting of an aqueous organic solvent and water or a mixed solvent consisting of an aliphatic hydrocarbon and an ester-based organic solvent.

**6.** The method as set forth in claim 5, wherein the polymerization solvent contains 50% by weight to 98% by weight of the aqueous organic solvent and 2% by weight to 50% by weight of water.

**7.** The method as set forth in claim 5, wherein the polymerization solvent contains 50% by weight to 98% by weight of the aliphatic hydrocarbon and 2% by weight to 50% by weight of the ester-based organic solvent.

**8.** An N-alkylmaleimide-based copolymer comprising:

30% by weight to 70% by weight of an N-alkylmaleimide-based structural unit represented by formula (2) below;
10% by weight to 40% by weight of a styrene-based structural unit; and
10% by weight to 40% by weight of a (meth)acrylate-based structural unit,
the N-alkylmaleimide-based copolymer satisfying the following requirements (a) and (b):

(a) the N-alkylmaleimide-based copolymer having a glass transition point (Tg) of 120°C to 180°C; and
(b) the N-alkylmaleimide-based copolymer having a weight average molecular weight (Mw) of 200,000 to 500,000,

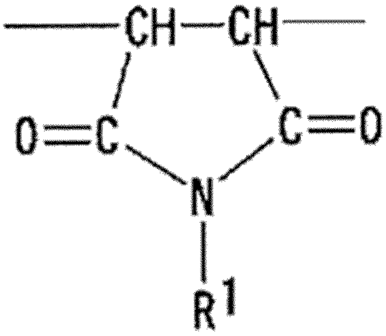

(2)

where $R^1$ represents a linear alkyl group having 1 to 12 carbon atoms, a branched alkyl group having 3 to 12 carbon atoms, or a cyclic alkyl group having 3 to 6 carbon atoms.

**9.** The N-alkylmaleimide-based copolymer as set forth in claim 8, wherein the following requirement (c) is further satisfied:
(c) in a chromatogram which is obtained by HPLC reverse phase chromatography using a poor solvent and a good solvent as mobile phases and which is composed of two or more kinds of components having respective different retention times, a ratio of a peak area of a component having a shorter retention time than the good solvent, relative to a total peak area, is 0.0% to 9.0%.

**INTERNATIONAL SEARCH REPORT**

International application No. **PCT/JP2023/024135**

**A. CLASSIFICATION OF SUBJECT MATTER**

***C08F 222/40***(2006.01)i
FI: C08F222/40

According to International Patent Classification (IPC) or to both national classification and IPC

**B. FIELDS SEARCHED**

Minimum documentation searched (classification system followed by classification symbols)

C08F222/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 5-140376 A (TOSOH CORP.) 08 June 1993 (1993-06-08) claims, paragraphs [0011], [0013], [0014], [0039]-[0041] | 1-5 |
| X | JP 2015-105315 A (TOSOH ORGANIC CHEMICAL CO., LTD.) 08 June 2015 (2015-06-08) claims, paragraphs [0017], [0021], [0024], [0039], [0040] | 1-6 |
| X | JP 6-220106 A (TOSOH CORP.) 09 August 1994 (1994-08-09) claims, paragraphs [0008], [0009], [0011], [0012], [0014], [0015], [0027], [0041]-[0043] | 1-5 |
| A | JP 61-28540 A (ATLANTIC RICHFIELD CO.) 08 February 1986 (1986-02-08) entire text | 1-7 |
| A | JP 63-130606 A (DENKI KAGAKU KOGYO K.K.) 02 June 1988 (1988-06-02) entire text | 1-7 |
| A | JP 2012-194533 A (JSR CORP.) 11 October 2012 (2012-10-11) entire text | 1-7 |
| A | JP 2009-215346 A (TOSOH CORP.) 24 September 2009 (2009-09-24) entire text | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 September 2023** | **19 September 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/024135**

**Box No. III Observations where unity of invention is lacking (Continuation of item 3 of first sheet)**

This International Searching Authority found multiple inventions in this international application, as follows:

Invention 1: Claims 1-7

The invention in claim 1 of the present application is set forth as a method for producing an N-alkyl maleimide copolymer obtained by radical copolymerization of a monomer containing 20-95% by weight of an N-alkyl maleimide represented by formula (1) and 5-80% by weight of a styrene compound; thus, claim 1 and claims 2-7 depending therefrom are classified as invention 1.

Invention 2: Claims 8-9

The invention in claim 8 of the present application is an N-alkyl maleimide copolymer containing 30-70% by weight of an N-alkyl maleimide structural unit represented by formula (2), 10-40% by weight of a styrene structural unit, and 10-40% by weight of a (meth)acrylate structural unit; thus, the invention in claim 1 of the present application and the invention in claim 8 of the present application have in common that each contains a specific % by weight of a specific N-alkyl maleimide and a styrene compound.

However, reference to the content disclosed in document 1 indicates that this commonality cannot be considered a special technical feature.

Moreover, claims 8-9 and claim 1 classified as invention 1 do not involve one or more of the same or corresponding special technical features. Furthermore, claims 8-9 are not substantially identical to or similarly closely related to any of the claims classified as invention 1.

Accordingly, the invention in claims 8-9 is classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-7**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2023/024135**

| Patent document cited in search report | Publication date (day/month/year) | Patent family member(s) | Publication date (day/month/year) |
|---|---|---|---|
| JP 5-140376 A | 08 June 1993 | (Family: none) | |
| JP 2015-105315 A | 08 June 2015 | (Family: none) | |
| JP 6-220106 A | 09 August 1994 | (Family: none) | |
| JP 61-28540 A | 08 February 1986 | US 4568722 A<br>entire text | |
| JP 63-130606 A | 02 June 1988 | (Family: none) | |
| JP 2012-194533 A | 11 October 2012 | CN 102654673 A | |
| JP 2009-215346 A | 24 September 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020126229 A
- JP 5194609 A
- JP 5209004 A
- JP 5247145 A


### Non-patent literature cited in the description


- **OTSU TAKAYUKI**. *Mirai Zairyou (Future Materials)*, vol. 3 (1), 74-79